(19) Europäisches Patentamt
European Patent Office
Office européen des brevets

(11) EP 4 667 512 A1

# (12) EUROPEAN PATENT APPLICATION

(43) Date of publication:
**24.12.2025 Bulletin 2025/52**

(21) Application number: **24182887.0**

(22) Date of filing: **18.06.2024**

(51) International Patent Classification (IPC):
***C08J 5/18*** *(2006.01)* ***B29C 48/00*** *(2019.01)*
***B29C 48/08*** *(2019.01)* ***B29C 55/12*** *(2006.01)*
***B29C 55/14*** *(2006.01)* ***C08K 5/00*** *(2006.01)*
***C08L 23/12*** *(2006.01)*

(52) Cooperative Patent Classification (CPC):
(C-Sets available)
**C08J 5/18; B29C 48/0018; B29C 48/08; B29C 55/12; B29C 55/143; C08L 23/12; H01G 4/18; H01G 4/32;** B29K 2023/12; C08J 2323/12; C08K 5/0083; C08L 2203/16; C08L 2205/025 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **GLOGER, Dietrich**
  **4021 Linz (AT)**
- **JERABEK, Michael**
  **4021 Linz (AT)**
- **WAHNER, Udo Maximilian**
  **4021 Linz (AT)**
- **STADLBAUER, Wolfram**
  **4021 Linz (AT)**

(74) Representative: **TBK**
**Bavariaring 4-6**
**80336 München (DE)**

## (54) INCREASED AREA STRETCH RATIO FOR CAPACITOR FILMS MADE OF A BIAXIALLY ORIENTED POLYPROPYLENE FILM

(57) The present invention relates to a biaxially oriented polypropylene (BOPP) film for capacitor containing a polypropylene composition comprising an isotactic crystalline polypropylene homopolymer having high pentad isotacticity <mmmm> and a broad polydispersity index being nucleated by a polymeric nucleating agent and a non-polymeric beta-nucleating agent, wherein the BOPP film has an area stretch ratio, which is obtained by multiplying the machine direction orientation stretch ratio and the traverse direction orientation stretch ratio, of 50 to 75.

EP 4 667 512 A1

(52) Cooperative Patent Classification (CPC): (Cont.)

C-Sets
**C08L 23/12, C08L 23/12, C08K 5/0083;**
**C08L 23/12, C08L 23/12, C08K 5/3437**

## Description

### Background of the Invention

Biaxial oriented polypropylene (BOPP) films are widely used for capacitor applications. The in-service temperatures of capacitors have been increased in recent years, which practically results in more demanding film requirements. To deliver high-performance BOPP capacitor films, outstanding mechanical properties such as film stiffness and electrical properties, such as electrical breakdown strength, in combination with product specific film roughness are essential.

To improve these properties, theoretically the polymer design and/or the stretching process parameters could be adjusted. This is, however, not trivial since process settings and polymer design are closely linked to each other. Subtle process adjustments may have significant consequences on the film properties. It is for instance common that the surface morphology develops as function of draw ratio and that the surface roughness effects on breakdown strength as introduced by varying process conditions.

Regarding efforts in the field oriented on the polymer design, it is for example described in EP 3 124 523 A1 to provide a biaxially oriented polypropylene film in which, in a solid viscoelasticity measurement, the relationship of the storage elastic modulus (E'23) at 23°C in the film width direction and the storage elastic modulus (E'125) at 125°C satisfies (E'125)/(E'23)>0.2, exemplary by combining a high-melt-tension polypropylene with a linear polypropylene, and WO 2016/038092 A1 focuses on a polypropylene composition with improved processability and heat resistance for use in a capacitor film by combining a propylene homopolymer, a long chain branched polypropylene, and a beta-nucleating agent, but the prior art provides no indications about stiffness and/or the influence of process (stretch) settings on desired properties and leaves room for further improvements. Further, regarding efforts in the field oriented on the process design, it is for example described in US 2018/068791 A1 to provide a biaxially oriented polypropylene film for a capacitor, in which $\mu$dm and $\mu$dt are each 0.60-1.70 and the value of the ratio ($\mu$dm/$\mu$dt) of $\mu$dm and $\mu$dt is 0.75 to less than 1.15, where $\mu$dm is the kinetic friction coefficient in a longitudinal direction and $\mu$dt is the kinetic friction coefficient in a width direction has the film thickness measured by a micrometer method of 0.5-3 $\mu$m, by exemplary using a polypropylene having a meso-pentad fraction of 97.9% and a melt flow rate (MFR) of 2.6 g/10 min as a linear polypropylene and varying the BOPP manufacturing settings indicating that increased stretch ratios lead to diminished high-temperature voltage withstanding ability.

Against this background, there is a constant need to improve the properties of biaxially oriented polypropylene (BOPP) capacitor films in terms of mechanical and electrical properties and a need to find a way to attain these improved properties in a simplified manner without adversely affecting other important properties of the BOPP film.

### Object of the invention

There is therefore a demand for a BOPP films having improved mechanical properties such as film stiffness and electrical properties, such as electrical breakdown strength, and to attain such properties by taking advantage of a suitable polymer design that enables to achieve these improvements in a simplified manner by varying the process (stretch) settings properly without scrutinising other important properties such as the film roughness.

It is therefore the object of the present invention to provide a biaxially oriented polypropylene (BOPP) film for capacitor having increased mechanical properties such as tensile modulus and tensile strength in machine direction orientation (MDO) and the electric break down strength while maintaining other properties, such as keeping a set film roughness (Ra) constant. It is a further object of the present invention to provide a metal laminated film for capacitor and a capacitor comprising an insulation film comprising a layer of the BOPP film. It is a still further object of the present invention to use a specific polypropylene composition to manufacture a BOPP film for a capacitor, a metal laminated film comprising the BOPP film and a metal film provided on at least one surface of the BOPP film, or a capacitor comprising the BOPP film for a capacitor as a layer of an insulation film, as well as a process for producing a BOPP film.

Unexpectedly, this technical object has been solved by providing a biaxially oriented polypropylene (BOPP) film for capacitor made of a specific polypropylene composition (PPC) essentially comprising a double nucleated isotactic crystalline polypropylene homopolymer (PPH) having a high pentad isotacticity <mmmm> and a broad polydispersity index (PI) and obtaining the BOPP film by stretching a flat film made of the PPC (also referred to as flat film, non-oriented film, precursor film or primary cast sheet) to obtain the BOPP film having a high area stretch ratio.

That is, the present invention relates to a biaxially oriented polypropylene (BOPP) film for capacitor containing a polypropylene composition (PPC) comprising, based on the total weight of the PPC,

94.9999 to 99.9990 wt.-% of an isotactic crystalline polypropylene homopolymer (PPH) having

a pentad isotacticity <mmmm>, as determined by quantitative nuclear-magnetic resonance (NMR), in the range of 95.5 to 99.0%, preferably 96.0 to 98.0%, more preferably 96.5 to 97.5%, and

a polydispersity index (PI), determined according to the description, in the range of 5.50 to 6.75 $Pa^{-1}$, preferably 5.75 to 6.50 $Pa^{-1}$, more preferably 5.95 to 6.30 $Pa^{-1}$;

0.0001 to 5.0000 wt.-% of a polymeric nucleating agent (PNA),
0.0001 to 0.1000 wt.-% of a non-polymeric beta-nucleating agent (BNA),
wherein the BOPP film has an area stretch ratio, which is obtained by multiplying the machine direction orientation (MDO) stretch ratio and the traverse direction orientation (TDO) stretch ratio, of 50 to 75.

The present invention further relates to a metal laminated film for capacitor comprising the BOPP film and a metal film provided on at least one surface of the BOPP film and a capacitor comprising an insulation film comprising a layer of the BOPP film.

The present invention further relates to the use of a specific polypropylene composition to manufacture a BOPP film for a capacitor, a metal laminated film comprising the BOPP film and a metal film provided on at least one surface of the BOPP film, or a capacitor comprising the BOPP film for a capacitor as a layer of an insulation film.

The present invention further relates to a process for producing a BOPP film. Preferred embodiments of the invention are depicted in the dependent claims and a detailed description of the invention is provided in the following description.

**Brief description of the drawings**

Fig. 1a shows the tensile modulus in machine direction (TM MD) of the BOPP films having an area stretch ratio of 45 (CE; MDO $\times$ TDO = 5.0 $\times$ 9.0), 54 (IE1; MDO $\times$ TDO = 6.0 $\times$ 9.0) and 63 (IE2; MDO $\times$ TDO = 7.0 $\times$ 9.0).

Fig. 1b shows the electric breakdown strength of the BOPP films having an area stretch ratio of 45 (CE; MDO $\times$ TDO = 5.0 $\times$ 9.0), 54 (IE1; MDO $\times$ TDO = 6.0 $\times$ 9.0) and 63 (IE2; MDO $\times$ TDO = 7.0 $\times$ 9.0).

Fig. 1c shows the center surface roughness Ra of the BOPP films having an area stretch ratio of 45 (CE; MDO $\times$ TDO = 5.0 $\times$ 9.0), 54 (IE1; MDO $\times$ TDO = 6.0 $\times$ 9.0) and 63 (IE2; MDO $\times$ TDO = 7.0 $\times$ 9.0).

**Detailed description**

The term "comprising" (as well as terms "containing", "including" or "having") as used in the present invention does not exclude other components. For the purposes of the present invention, the term "consisting of" is considered to be a preferred embodiment of the term "comprising of" (as well as terms "containing", "including" or "having) unless specifically defined otherwise. Likewise, if hereinafter a group is defined to comprise at least a certain number of embodiments, this is also to be understood to disclose a group, which preferably consists only of these embodiments, unless specifically defined otherwise. Further, unless explicitly described otherwise, the description of the present invention is to be understood so that one or more of any of the described preferred embodiments of the invention can be combined with the invention described in its most general features.

Further, where an indefinite or definite article is used when referring to a singular noun, e.g. "a", "an" or "the", this includes a plural of that noun unless something else is specifically stated.

When reference is made to a method or step or stage or reactor or apparatus (or similar) "for" producing or forming a certain material (e.g. polymer fraction) or "for" performing a certain action, this shall be understood that this step (or stage or reactor, etc.) is adapted to (configured to) produce (or form) that certain material or to perform this certain action.

**Biaxially oriented polypropylene (BOPP) film for capacitor**

The present invention relates to a biaxially oriented polypropylene (BOPP) film for capacitor containing a polypropylene composition (PPC) comprising, based on the total weight of the PPC,

94.9999 to 99.9990 wt.-% of an isotactic crystalline polypropylene homopolymer (PPH) having

a pentad isotacticity <mmmm>, as determined by quantitative nuclear-magnetic resonance (NMR), in the range of 95.5 to 99.0%, preferably 96.0 to 98.0%, more preferably 96.5 to 97.5%, and
a polydispersity index (PI), determined according to the description, in the range of 5.50 to 6.75 $Pa^{-1}$, preferably

5.75 to 6.50 $Pa^{-1}$, more preferably 5.95 to 6.30 $Pa^{-1}$;

0.0001 to 5.0000 wt.-% of a polymeric nucleating agent (PNA),
0.0001 to 0.1000 wt.-% of a non-polymeric beta-nucleating agent (BNA),
wherein the BOPP film has an area stretch ratio, which is obtained by multiplying the machine direction orientation (MDO) stretch ratio and the traverse direction orientation (TDO) stretch ratio, of 50 to 75.

The BOPP film for capacitor is thus characterized by combining a specific polypropylene composition (PPC) and a specific high area stretch ratio, wherein the BOPP film comprises, based on the total weight of the BOPP film, at least 85.0 wt.-%, preferably at least 90.0 wt.-%, more preferably at least 98.0 wt.-%, or even consists of, the polypropylene composition (PPC) as defined in the present invention.

Essentially, the BOPP film has an area stretch ratio, which is obtained by multiplying the machine direction orientation (MDO) stretch ratio and the traverse direction orientation (TDO) stretch ratio, of 50 to 75.

Preferably, the area stretch ratio is in the range of 56 to 75, such as 63±3. The area stretch ratio is obtained by stretching the flat film (non-oriented film or precursor film) in machine direction orientation (MDO) and in traverse direction orientation (TDO), without limitation to obtain the BOPP having the above area stretch ratio. However, the BOPP film preferably has a stretching ratio of 5.5 to 8.0, more preferably 6.0 to 7.5, such as 6.0 or 7.0 in the MDO and a stretching ratio of 8.0 to 10.0, preferably 8.5 to 9.5, such as 9.0 in the TDO. These preferred drawing conditions, such as e.g. MDO × TDO = 6.0 × 9.0 and especially MDO × TDO = 7.0 × 9.0, are particularly suitable to attain the BOPP film of the present invention being improved in the mechanical properties such increased MDO tensile modulus and tensile strength and in the electric break down strength while keeping the surface center roughness Ra constant.

The orientation of the flat film in the MDO and in the TDO to obtain the BOPP film having the required area stretch ratio can be conducted by procedures known in the art such as a simultaneous stretching process or a sequential stretching process, with a sequential stretching process representing a preferred stretching process in the present invention.

The BOPP film for capacitor of the present invention has a thickness that is usually applied in the technical field of the present invention without limitation. However, the BOPP film for capacitor of the present invention preferably has a thickness in the range of 1.5 to 6.5 μm, more preferably 2.0 to 5.0 μm, and most preferably 2.5 to 5.50 μm.

By means of the BOPP film for capacitor combining a specific polypropylene composition (PPC) and the specific high area stretch ratio, the present invention is able to achieve improved mechanical properties such as a high MDO tensile modulus and tensile strength and a high electric break down strength while keeping the surface roughness Ra constant.

More specifically, the present invention is able to provide a BOPP film for capacitor having a suitable set surface center roughness Ra in the range of 0.050 to 0.120 μm, preferably 0.055 to 0.095 μm, most preferably 0.060 to 0.090 μm. Such surface roughness ensures a BOPP film with suitable properties such as anti-cling properties (i.e. the roughness imparts a slip agent property) that allows film layers on a roll to move relative to each other.

Surprisingly, the present inventors found out that by using the later described specific polypropylene composition (PPC) essentially comprising a double nucleated isotactic crystalline polypropylene homopolymer (PPH) having a high pentad isotacticity <mmmm> and a broad polydispersity index (PI), the desired set surface center roughness Ra essentially remains constant irrespective of the stretching conditions (area stretch ratio) applied. That means that it is unexpectedly possible to improve the film properties, especially in terms of attaining a high MDO tensile modulus and tensile strength and a high electric break down strength, by increasing the area stretch ratio without adversely affecting the roughness of the BOPP film. Hence, it is unexpectedly possible to improve the BOPP film properties by not being forced to change the polymer setting but only by changing the stretch settings without even compromising on the desired roughness profile, by using the specific polypropylene composition.

Accordingly, the present invention is able to provide a BOPP film for capacitor that preferably has a Tensile Modulus (TM) in machine direction (MD) of 2850 MPa or more, more preferably of 2850 to 4500 MPa or 2900 to 3650 MPa. The present invention is further able to provide a BOPP film for capacitor that preferably has a Tensile Modulus (TM) in traverse direction (TD) of 3000 MPa or more, more preferably of 3000 to 5000 MPa or 3250 to 4500 MPa. As such, the present invention is further able to provide a BOPP film for capacitor that preferably has an average Tensile Modulus (TM), i.e. an average of the TM in MD and in TD ((TM MD + TM TD)/2), of 3450 MPa or more, more preferably of 3450 to 4500 MPa or 3500 to 4250 MPa. In this case, the present invention is able to achieve favorable stiffness properties and can thus be used in applications requiring a certain stiffness behavior.

Moreover, the ratio of the Tensile Modulus (TM) in traverse direction (TD) to the Tensile Modulus (TM) in machine direction (MD) (TM TD/TM MD ratio) is preferably below 1.40, such as in the range of 0.90 to 1.40 or 0.90 to 1.20. A TM TD/TM MD ratio close to 1 means that the BOPP film has a favorable stiffness isotropy, which is a consequence of the MDO stretch ratio getting more similar to the TDO stretch ratio, which is unexpectedly enabled by the specific polymer design applied in the present invention.

Accordingly, the present invention is able to provide a BOPP film for capacitor that preferably has a Tensile

Strength (TS) in machine direction (MD) of 195 MPa or more, more preferably of 195 to 400 MPa or 200 to 325 MPa. The present invention is further able to provide a BOPP film for capacitor that preferably has a Tensile Strength (TS) in traverse direction (TD) of 200 MPa or more, more preferably of 200 to 450 MPa or 225 to 375 MPa. As such, the present invention is further able to provide a BOPP film for capacitor that preferably has an average Tensile Strength (TS), i.e. an average of the TS in MD and in TD ((TS MD + TS TD)/2), of 230 MPa or more, more preferably of 230 to 400 MPa or 235 to 350 MPa. In this case, the present invention is able to achieve favorable toughness properties and can thus be used in applications requiring a certain toughness behavior.

Moreover, the ratio of the Tensile Strength (TS) in traverse direction (TD) to the Tensile Strength (TS) in machine direction (MD) (TS TD/TS MD ratio) is preferably below 1.35, such as in the range of 0.90 to 1.35 or 0.90 to 1.20. A TS TD/TS MD ratio close to 1 means that the BOPP film has a favorable toughness isotropy, which is a consequence of MDO stretch ratio getting more similar to TDO stretch ratio, which is unexpectedly enabled by the specific polymer design applied in the present invention.

Accordingly, the present invention is able to provide a BOPP film for capacitor that preferably has an (average) electric break down strength of 545 kV/mm or more, more preferably 545 to 750 kV/mm or 600 to 725 kV/mm. In this case, the present invention is achieve favorable electric properties desired in the technical field of the present invention.

Needless to say that each of the above described properties of the BOPP (e.g. area stretch ratio, MDO stretch ratio, TDO stretch ratio, thickness, TM MD, TM TD, average TM, TS MD, TS TD, average TS, Ra etc.) as described herein may preferably be individually adjusted into a preferred or more preferred range, while it is even more preferred that two or more, most preferably all, of the above properties are adjusted into preferred and/or even more preferred ranges in combination. This principle generally applies throughout the entire application to other mentioned properties in connection with (preferred) quantifications.

## Polypropylene Composition (PPC)

The polypropylene composition (PPC) applied for the biaxially oriented polypropylene (BOPP) film for capacitor of the present invention is characterized by comprising, based on the total weight of the PPC,

94.9999 to 99.9990 wt.-% of an isotactic crystalline polypropylene homopolymer (PPH);
0.0001 to 5.0000 wt.-% of a polymeric nucleating agent (PNA),
0.0001 to 0.1000 wt.-% of a non-polymeric beta-nucleating agent (BNA).

That is, the polypropylene composition (PPC) in accordance with the present invention essentially comprises the isotactic crystalline polypropylene homopolymer (PPH), the polymeric nucleating agent (PNA) and the non-polymeric beta-nucleating agent (BNA) and may further contain other components such as additive(s). The requirement applies that the PPH, the PNA, the BNA and other components, as far as being present, add up to 100 wt.-%, provided that the amount of the PPH, the PNA, and the BNA accounts for at least 95.0 wt.-% of the PPC. Preferably, the PPC of the present invention comprises, based on the total weight of the PPC, 95.0 to 99.99 wt.-%, more preferably 96.0 to 99.99 wt.-%, even more preferably 97.0 to 99.95 wt.-%, most preferably 97.5 to 99.9 wt.-%, of the PPH, the PNA, and the BNA, thereby facilitating to achieve the favorable proprieties underlying the present invention. It is to be understood that if various ranges are indicated, the lower and upper limit(s) of the various ranges can be suitable combined to form another range and this general principle applies throughout the entire application. Further, the present invention does not aim at a composition of different polymers. Accordingly, the PPC comprises other components such as additives, but preferably no other polymer components than the PPH and the PNA, except for optional carrier polymers of a masterbatch for adding other component(s) such as additive(s). The amount of such masterbatch carrier polymer, if used, usually does not exceed 4.0 wt.-%, preferably is used in an amount of 3.0 wt.-% or less or 1.0 wt.-% or less, based on the total weight of the PPC. The present invention can achieve the herein described envisaged beneficial technical effects by providing the PPC which essentially consists of the PPH, the PNA and the BNA along with minor amounts of conventional (stabilizing) additives.

The polypropylene composition (PPC) essentially comprises an isotactic crystalline polypropylene homopolymer (PPH) having

a pentad isotacticity <mmmm>, as determined by quantitative nuclear-magnetic resonance (NMR), in the range of 95.5 to 99.0%, preferably 96.0 to 98.0%, more preferably 96.5 to 97.5%, and
a polydispersity index (PI), determined according to the description, in the range of 5.50 to 6.75 $Pa^{-1}$, preferably 5.75 to 6.50 $Pa^{-1}$, more preferably 5.95 to 6.30 $Pa^{-1}$. By satisfying these essential characteristics, the PPH, which is further compounded with a polymeric nucleating agent (PNA) and a non-polymeric beta-nucleating agent (BNA) as described later, can be favorable used to provide a BOPP film having the above described improved film properties by increasing the area stretch ratio without adversely affecting the roughness of the BOPP film.

Preferably, the polypropylene homopolymer (PPH) of the present invention has a weight average molecular weight $M_w$ (GPC) in the range of 300.0 to 450.0 kg/mol, more preferably 320.0 to 420.0 kg/mol, more preferably 330.0 to 410.0 kg/mol, most preferably 350.0 to 400.0 kg/mol. In this case, due to a suitable and favorable adjusted $M_w$, the effects of the present invention are more pronounced and/or their achievement is facilitated.

Preferably, the polypropylene homopolymer (PPH) of the present invention has a molecular weight distribution $M_w/M_n$ (MWD) in the range of 8.4 to 10.5, more preferably 8.5 to 10.2, most preferably 9.0 to 10.0. In this case, due to a suitable and favorable adjusted $M_w/M_n$, the effects of the present invention are more pronounced and/or their achievement is facilitated.

Preferably, the polypropylene homopolymer (PPH) of the present invention has a xylene cold solubles (XCS) content (25°C, ISO 16152) of 0.25 to 1.60 wt.-%, more preferably 0.50 to 1.50 wt.-%, most preferably 0.75 to 1.45 wt.-%. In this case, due to a suitable and favorable adjusted low XCS, the effects of the present invention are more pronounced and/or their achievement is facilitated.

Preferably, the polypropylene homopolymer (PPH) of the present invention has a melt flow rate ($MFR_2$) (230°C, 2.16 kg, ISO 1133) of 1.00 to 7.50 g/10min, more preferably 2.00 to 6.00 g/10min, more preferably 2.50 to 4.40 g/10min, more preferably 2.75 to 4.00 g/10min, most preferably 2.95 to 3.75 g/10min. In this case, due to a suitable and favorable adjusted moderate $MFR_2$, the effects of the present invention are more pronounced and/or their achievement is facilitated.

In line with the above general principle, it is apparent that each of the above described properties of the PPH (e.g. <mmmm>, PI, $M_w$, $M_w/M_n$, XCS, $MFR_2$) as described herein may preferably be individually adjusted into a preferred or more preferred range, while it is even more preferred that two or more, most preferably all, of the above properties are adjusted into preferred and/or even more preferred ranges in combination. Again, this principle generally applies throughout the entire application to other mentioned properties in connection with (preferred) quantifications.

The PPH is essentially comprised in the PPC, based on the total weight of the PPC, in an amount of 94.9999 to 99.9990 wt.-%, preferably 97.0000 to 99.9900 wt.-%, more preferably 97.5000 to 99.9000 wt.-%, most preferably 98.0000 to 99.7000 wt.-%. Such contents of the PPH represent reasonable contents where the respective amounts of the remaining components are sufficiently high to achieve the desired technical effects.

Further, the PPH may be a polypropylene homopolymer in which preferably only propylene units are detectable (e.g. determined with $^{13}C$ NMR spectroscopy). However, a skilled person and the present invention appreciates that production methods commonly employed in the art may result in contamination with comonomers, especially in case a prepolymerization step using comonomer(s) and/or nucleating agent monomers is applied. Note that in the present invention, a prepolymerization is not considered to represent a main polymerization step of its own and the amount and properties (such as comonomer content etc.) of a prepolymer fraction produced in a prepolymerization step is counted to the amount (wt.-%) and properties of the main polymer fraction unless stated otherwise. In the present invention, the term polypropylene homopolymer is thus intended to refer to the constitution of the main polymerization fraction excluding an optional prepolymer fraction. That means that for instance the main polypropylene homopolymer fraction may be produced by supply of only propylene units (as polymerizing monomers) to give a propylene homopolymer fraction, while the prepolymer may be produced using propylene and comonomer(s) such as nucleating agent monomers as described later. In this case, although the monomer of a prepolymer fraction, if present, is accounted by definition to the main polypropylene homopolymer fraction, the PPH polypropylene homopolymer is still classified as homopolymer if the main polypropylene fraction is a homopolymer. Further, even though it is usually desired to keep contaminations at a low level (i.e. in trace amounts), the main polypropylene fraction being a homopolymer may therefore contain certain amounts of contaminate comonomers as e.g. derived from prepolymerization. As such, the term homopolymer, as used herein, therefore refers to a polypropylene polymer containing at least 99.0 mol%, preferably at least 99.8 mol%, more preferably at least 99.9 mol%, or even 100 mol% of propylene units (e.g. determined by quantitative $^{13}C$ NMR spectroscopy), as long as the claimed requirements of the PPH as well as that of the PPC are satisfied.

The isotactic crystalline polypropylene homopolymer (PPH) may be produced by any procedure known in the art. However, there exists a crucial difference in the chain-microstructure between polypropylenes produced by a single site catalyst such as a metallocene catalyst and a Ziegler-Natta catalyst. The chain regularity of metallocene-based polypropylene is reduced by stereo- and regio-defects, whereas the chain regularity of Ziegler-Natta based polypropylenes is only reduced by stereo defects. It is preferred that the isotactic crystalline polypropylene homopolymer is obtained in the presence of a Ziegler-Natta catalyst yielding the isotactic crystalline polypropylene homopolymer having the above described characteristics especially in terms of high pentad isotacticity <mmmm> with a broad polydispersity index (PI) as described above. More preferably, the isotactic crystalline polypropylene homopolymer is a Ziegler-Natta catalyst-polymerized polymer, which is bi- or multimodal. The term "bi- or multi modal" means herein bimodality attained by performing polymerization under different polymerization conditions in different polymerization reactors connected in series resulting in different polymer components with different characteristic's such as e.g. $MFR_2$, and/or density, Mw, etc.

The polymerization of propylene by using a Ziegler-Natta catalyst may be performed in one or more, e.g. 1, 2, 3 and more, polymerization reactors, using conventional polymerization techniques, e.g. gas phase, solution phase, slurry or bulk polymerization. In case more than one polymerization reactor is used, the polymerization reactors are preferably

connected in series. Preferably, the polymerization is a slurry polymerization process. Preferably, the polymerization is performed in at least two polymerization reactors connected in series, which are preferably slurry reactors. The term "slurry polymerization process" is understood as known in the art. Accordingly a slurry polymerization process means according to this invention a polymerization process in which solid polymer, i.e. the polypropylene, is formed in a liquid polymerization medium (diluent), the liquid medium preferably comprising at least 50 wt.-% of diluent. Further, the term "polymerization reactor" herein shall indicate that the main polymerization takes place in said polymerization reactor(s). This definition does not exclude the option that the overall process comprises for instance a pre-polymerization step in a pre-polymerization vessel, such as for incorporating a polymeric nucleating agent as a polymer fraction into the PPH by means of prepolymerization.

Preferably, the polymerization is accomplished in multiple polymerization reactors, wherein different process conditions are applied in the multiple polymerization reactors for facilitating to obtain a polymer having a broad polydispersity index (PI).

Preferably, the isotactic crystalline polypropylene homopolymer is polymerized in a slurry polymerization process, wherein at least

(a) a Ziegler-Natta catalyst, preferably a titanium compound, more preferably $TiCl_3$,
(b) propylene, and
(c) a diluent (D) comprising a donor agent, preferably an external donor selected from the group consisting of methyl methacrylate, butyl methacrylate, 2-ethyl 1-hexyl methacrylate, and tridecyl methacrylate, more preferably methyl methacrylate,

are fed into a polymerization reactor, in case of several polymerization reactors in at least the first polymerization reactor, to conduct polymerization.

The Ziegler-Natta catalyst system preferably comprises a co-catalyst such as an organic aluminum compound and may contain internal donors.

Such polymerization processes are described in e.g. WO 2021/239594 A1 and especially WO 2013/004781 A1 and details about the Ziegler-Natta catalyst system including co-catalysts, internal and external donors, and how to prepare Ziegler-Natta catalyzed bi- and multimodal polypropylene polymers can be found in these references, the respective contents being incorporated herein by reference.

The polypropylene composition (PPC) essentially further comprises in addition to the PPH a polymeric nucleating agent (PNA) and a non-polymeric beta-nucleating agent (BNA). For details e.g. regarding the distinction between different types of nucleating agents, such as organic type, polymeric type and inorganic type nucleating agents, reference is made to M. Gahleitner, C. Grein, S. Kheirandish & J. Wolfschwenger, "Nucleation of Polypropylene Homo- and Copolymers", Intern.Polym.Proc. 26 (2011) 2-20. Hence, the present invention is based on the favorable interaction of a polymeric nucleating agent (PNA) and non-polymeric beta-nucleating agent (BNA) with the specific PPH as defined in the present invention. Although the specific interaction achieved by this combination is not fully understood, it was found that this combination provides the remarkable improvements of the BOPP film of the present invention.

At stated above, the polypropylene composition (PPC) essentially comprises a polymeric nucleating agent (PNA). The PNA is essentially comprised in the PPC, based on the total weight of the PPC, in an amount of 0.0001 to 5.0000 wt.-%, while preferred contents thereof depend on the individual PNA applied as described below. Such a content of the PNA represents a reasonable content sufficient to achieve the desired technical effects.

The term "polymeric nucleating agent" refers to any polymeric nucleating agent which is suitable for inducing and increasing the crystallisation of a propylene polymer. However, in the present invention the polymeric nucleating agent (PNA) is preferably at least one, more preferably one selected from

a long chain branched polypropylene (LCBP);
a polymer of a vinyl compound of formula $CH_2=CH-CHR^6R^7$ (PV), wherein $R^6$ and $R^7$ together form a 5- or 6-membered saturated, unsaturated or aromatic ring or independently represent an alkyl group comprising 1 to 4 carbon atoms, such as vinyl-cyclohexane or vinyl-cyclopentane; and
a nucleated polypropylene polymer (NPP), which is a polypropylene carrier polymer being nucleated by a polymer fraction of a vinyl compound of formula $CH_2=CH-CHR^6R^7$, wherein $R^6$ and $R^7$ together form a 5- or 6-membered saturated, unsaturated or aromatic ring or independently represent an alkyl group comprising 1 to 4 carbon atoms, such as vinyl-cyclohexane or vinyl-cyclopentane.

In the present invention, the polymeric nucleating agent (PNA) may thus be a polymer of a vinyl compound of formula $CH_2=CH-CHR^6R^7$ (PV) contained as a polymer fraction of the PPH. In this case, the PV as the PNA is preferably contained in the PPC as a polymer fraction of the PPH at 0.0001 to 0.1000 wt.-%, more preferably 0.0005 to 0.0500 wt.-%, most preferably 0.0008 to 0.0100 wt.-%, based on the total weight of the PPC. Preferably, the PV is a homopolymer of the

vinyl compound of the formula $CH_2=CH-CHR^6R^7$.

The method for incorporating the PV into the PPC includes prepolymerizing the polymerization catalyst by contacting the catalyst with the vinyl compound of the formula $CH_2=CH-CHR^6R^7$, wherein $R^6$ and $R^7$ together form a 5- or 6-membered saturated, unsaturated, or aromatic ring, or independently represent an alkyl group comprising 1 to 4 carbon atoms. Propylene is then polymerized in the presence of such prepolymerized catalyst.

In the prepolymerization the catalyst is prepolymerized so that it contains up to 5 grams of prepolymer per gram of solid catalyst component, preferably from 0.1 to 4 grams of prepolymer per gram of the solid catalyst component. Then, the catalyst is contacted at polymerization conditions with the vinyl compound of the formula $CH_2=CH-CHR^6R^7$, wherein $R^6$ and $R^7$ are as defined above.

Preferably $R^6$ and $R^7$ are both methyl groups and the vinyl compound is accordingly 3-methyl-1-butene. Preferably $R^6$ and $R^7$ form a saturated 5- or 6-membered ring, such as vinyl-cyclohexane or vinyl-cyclopentane and more preferably the vinyl compound is vinyl-cyclohexane.

Thus, the PV is preferably selected from the group consisting of poly(vinyl-cyclohexane), poly(3-methyl-1-butene) and mixtures thereof.

This approach allows the preparation of nucleated polypropylene as disclosed in EP-A-607703, EP-A-1028984, EP-A-1028985 and EP-A-1030878. The PV as the polymeric nucleating agent (PNA) is not a polymer of propylene but is a polymer fraction of the PPH incorporated by prepolymerization.

Preferably, the prepolymerization is conducted in slurry in an inert diluent at a temperature within the range of from 20 to 80°C, preferably from 35 to 65°C. The pressure is not critical and can be selected from an atmospheric pressure to 50 bar. The reaction time is selected so that the amount of unreacted vinyl compound is less than a predetermined limit, such as less than 2000 ppm of the reaction mixture, or less than 1000 ppm.

As described above, after prepolymerizing the polymerization catalyst, propylene is polymerized in the presence of such prepolymerized catalyst which approach allows the preparation of nucleated isotactic crystalline polypropylene homopolymer (PPH). Hence, in case of applying the PV as the PNA, the PPH is produced by homopolymerizing propylene in the presence of such prepolymerized catalyst and the propylene homopolymer is thereby nucleated by the PV. The PPC then comprises the PV as a polymer fraction of the PPH, preferably poly(vinyl-cyclohexane). The polymerization process and the catalyst are suitably as described before.

Alternatively, the polymeric nucleating agent (PNA) may preferably be a nucleated polypropylene polymer (NPP). In this case, the NPP as the PNA is preferably contained in the PPC at 0.0010 to 4.5000 wt.-%, more preferably 0.1000 to 4.0000 wt.-%, more preferably 0.2000 to 3.0000 wt.-%, most preferably 0.3000 to 1.5000 wt.-%, based on the total weight of the PPC.

In this case, the PPH is produced by homopolymerizing propylene in the presence of a polymerization catalyst which has not been prepolymerized with the vinyl compound (i.e. $CH_2=CH-CHR^6R^7$) as disclosed above, so that the PPH does not contain the PV as polymer fraction. Instead, in such a case, the PPH is combined before or at the extrusion step with a further polymer, namely a propylene homo- or copolymer (nucleated polypropylene polymer (NPP)) which has been produced by homopolymerizing propylene, or copolymerizing propylene and a comonomer, in the presence of a catalyst which has been prepolymerized with the vinyl compound as referred to above.

Hence, the polypropylene polymer fraction of the NPP acts as a carrier polymer for the polymer fraction of the vinyl compound of formula $CH_2=CH-CHR^6R^7$ (PFV) acting as nucleating agent. The NPP preferably comprises from 0.5 to 200 ppm, preferably from 0.5 to 100 ppm, more preferably from 1 to 200 ppm, such as 1 to 100 ppm, of the polymer fraction PFV, preferably of poly(vinyl-cyclohexane), based on the total weight of NPP.

The NPP is preferably substantially free of long chain branches and especially does not contain long chain branches in a detectable amount.

Further, the NPP can be produced according to the methods known in the art. As described above, according to the method to produce the PV, the NPP is produced by homopolymerizing propylene in the presence of a catalyst which is prepolymerized with a vinyl compound of the formula $CH_2=CH-CHR^6R^7$, wherein $R^6$ and $R^7$ are as defined above. It is preferred that the vinyl compound is vinyl-cyclohexane. The NPP is thereby nucleated by the PFV.

The polymerization process and the catalyst for producing the NPP may be similar to what is described above for the PPH and the PPH including the PV. Thereby, the NPP is formed on the catalyst containing the polymer fraction of a vinyl compound of formula $CH_2=CH-CHR^6R^7$ acting as nucleating agent.

Suitable processes for producing the NPP containing the polymer fraction of a vinyl compound of formula $CH_2=CH-CHR^6R^7$ acting as nucleating agent are disclosed, among others, in WO-A-99/24479, WO-A-00/68315, EP-A-1801157, EP-A-1801155, EP-A-1818365, and WO 2020/127861 A1.

Alternatively, the polymeric nucleating agent (PNA) may preferably be a long chain branched polypropylene (LCBP). In this case, the LCBP as the PNA is preferably contained in the PPC at 0.100 to 5.000 wt.-%, more preferably 0.100 to 4.000 wt.-%, more preferably 0.100 to 2.500 wt.-%, most preferably 0.100 to 1.500 wt.-%, based on the total weight of the PPC. The term "long chain branched polypropylene" used in the present invention refers to a branched polypropylene differing from a linear polypropylene in that the polypropylene backbone has long side chains other than the

mandatory methyl branches derived from propylene, such as branches exceeding methyl branches (C1) by at least a factor 10. The side chains have significant impact on the rheology of the polypropylene. Accordingly, linear polypropylenes and branched polypropylenes can be clearly distinguished by its flow behaviour under stress.

Branching can be achieved by using specific catalysts, i.e. specific single-site catalysts, or by chemical modification. Concerning the preparation of a branched polypropylene obtained by the use of a specific catalyst reference is made to EP 1 892 264. With regard to a branched polypropylene obtained by chemical modification it is referred to EP 0 879 830 A1. In such a case, the branched polypropylene is also called high melt strength polypropylene. The long chain branched polypropylene according to the present invention is obtained by chemical modification as described in more detail below and thus is a high melt strength polypropylene (HMS-PP). Therefore, the terms "long chain branched polypropylene" and "high melt strength polypropylene (HMS-PP)" can be regarded in the present invention as synonyms.

Therefore, the long chain branched polypropylene (LCBP), i.e. the high melt strength polypropylene (HMS-PP), of the present invention preferably has a F30 melt strength of at least 15.0 cN and a v30 melt extensibility of at least 200 mm/s, more preferably has a F30 melt strength in the range of 15.0 to 50.0 cN, more preferably 20.0 to 45.0 cN, like 25.0 to 40.0 cN, and a v30 melt extensibility in the range of 200 to 300 mm/s, more preferably 215 to 285 mm/s, like 235 to 275 mm/s in order to provide a resulting PPC with good strain hardening effect. The F30 melt strength and the v30 melt extensibility are measured according to ISO 16790:2021 at 200°C.

The long chain branched polypropylene (LCBP) can be produced by any number of processes, e.g. by treatment of the unmodified propylene polymer with thermally decomposing radical-forming agents and/or by treatment with ionizing radiation, where both treatments may optionally be accompanied or followed by a treatment with bi- or multifunctional ethylenically unsaturated monomers, e.g. butadiene, isoprene, dimethylbutadiene, divinylbenzene or trivinylbenzene.

"Bifunctional ethylenically unsaturated" as used above means the presence of two non-aromatic double bonds, as in e.g. divinylbenzene or cyclopentadiene. Only such bifunctional ethylenically unsaturated compounds are used which can be polymerized with the aid of free radicals. The bifunctionally unsaturated monomer is in its chemically bound state not actually "unsaturated", because the two double bonds are each used for a covalent bond to the polymer chains of the linear polypropylene.

Examples of the long chain branched polypropylene (LCBP), are in particular:

- polypropylenes modified by reaction with bismaleimido compounds in the melt (EP-A-0 574 801 and EP-A-0 574 804)
- polypropylenes modified by treatment with ionizing radiation (EP 0 190 889 A2)
- polypropylenes modified by treatment with peroxides in the solid phase (EP 0 384 431 A2) or in the melt (EP 0 142 724 A2),
- polypropylenes modified by treatment with bifunctional ethylenically unsaturated monomers under the action of ionizing radiation (EP-A-0 678 527),
- polypropylenes modified by treatment with bifunctional ethylenically unsaturated monomers in the presence of peroxides in the melt (EP-A-0 688 817 and EP-A-0 450 342).

From the above list, these long chain branched polypropylenes (LCBP) are preferred, which are obtained by treatment with peroxides, especially when followed by a treatment with bifunctional ethylenically unsaturated monomers.

A preferred long chain branched polypropylene (LCBP) is obtained by mixing a linear polypropylene with 0.01 to 3 wt.-% of an organic peroxide which is thermally decomposable under melting conditions of the polypropylene and heating and melting the mixture.

A still more preferred long chain branched polypropylene (LCBP) is obtained by mixing a linear polypropylene with 0.01 to 3 wt.-% of an organic peroxide which is thermally decomposable under melting conditions of the polypropylene and with from 0.2 to 3 wt.-% of a bifunctional ethylenically unsaturated monomer and heating and melting the mixture.

The bifunctional ethylenically unsaturated monomer may be added at any time before or during heating and melting the linear polypropylene/peroxide mixture. The bifunctional monomer may also be added to the linear polypropylene before it is mixed with the peroxide.

According to a preferred embodiment, the bifunctional monomer is in gaseous or liquid state absorbed by the - still solid - polypropylene.

According to a preferred method, long chain branched polypropylene (LCBP) are prepared by mixing a particulate linear propylene polymer with from 0.05 to 3 wt.-%, based on the linear propylene polymer, of an organic peroxide which is thermally decomposable under melting conditions of the polypropylene (acyl peroxides, alkyl peroxides, peresters and/or peroxycarbonates). The peroxides may optionally be solvatised in an inert solvent. Mixing is performed at temperatures of from 30-100°C, preferably of from 60-90°C.

Mixing with the peroxide(s) is followed by contacting the polypropylene/peroxide mixture with the bifunctional ethylenically unsaturated monomer(s). The bifunctional monomer may be in gaseous or liquid state and may be applied in pure or diluted form, e.g. diluted with an inert gas or solvatised in an organic solvent. The bifunctional monomer is allowed to be absorbed by the particulate polypropylene at a temperature of from 20 to 120°C, preferably of from 60 to 100°C.

Practical sorption times are from 10 to 1000 s, 60 to 600 s being preferred. This typically results in an absorbed amount of bifunctional monomer of from 0.01 to 10 wt.-%, respectively from 0.05 to 2 wt.-%, based on the linear propylene polymer.

The polypropylene/peroxide/monomer mixture is then heated and melted in an atmosphere comprising inert gas, e.g. $N_2$, and/or the bifunctional monomer, from sorption temperature to 210°C. This causes the peroxides to decompose and to generate free radicals at the propylene polymer chains which react with the bifunctional monomers.

The melt is heated up to 280°C in order to remove unreacted monomers and decomposition products and finally the melt is pelletised.

The linear polypropylene comprises propylene homopolymers, copolymers of propylene and ethylene and/or $\alpha$-olefins with 4 to 18 carbon atoms and mixtures of such homo- and copolymers. According to a preferred embodiment of the present, invention the long chain branched polypropylene (B) is prepared based on a propylene homopolymer with low ash content (measured according to ISO 3451-1 (1997)), preferably an ash content of < 60 ppm.

According to a still further preferred embodiment of the present invention, the long chain branched polypropylene (B) is prepared based on the propylene homopolymer (A), the propylene homopolymer (A) being linear.

The particulate linear propylene polymer may have the shape of powders, granules or grit.

The above described process preferably is a continuous method, performed in continuous reactors, mixers, kneaders and extruders. Batchwise production of the modified propylene polymer, however is feasible as well.

Preferably the bifunctional monomers are absorbed by the linear propylene polymer from the gas phase. The bifunctional ethylenically unsaturated monomers preferably are $C_4$ to $C_{10}$ dienes and/or $C_7$ to $C_{10}$ divinyl compounds. Especially preferred are butadiene, isoprene, dimethyl-butadiene or divinylbenzene.

The following peroxides are suitable for the above described process:

- acyl peroxides, such as dibenzoyl peroxide, benzoyl peroxide, 4-chlorobenzoyl peroxide, 3-methoxybenzoyl peroxide and methylbenzoyl peroxide;
- alkyl peroxides such as allyl tert-butyl peroxide, 2,2-di(tert-butylperoxy)butane, di-tert-amyl peroxide, 1,1-bis(tert-butylperoxy)-3,3,5-trimethylcyclohexane, n-butyl 4,4-bis(tert-butylperoxy)valerate, diisopropylaminomethyl tert-amyl peroxide, dimethylaminomethyl tert-amyl peroxide, diethylaminomethyl tert-butyl peroxide, dimethylamino methyl tert-butyl peroxide, 1,1-di(tert-amylperoxy) cyclohexane, tert-amyl peroxide, tert-butyl cumyl peroxide, methyl isobutyl ketone peroxide, 2,2-Di(4,4-di(tert-butylperoxy)cyclohexyl)propane, tert-butyl peroxide and 1-hydroxybutyl n-butyl peroxide;
- peresters and peroxycarbonates, such as tert-butyl peroxyacetate, tert-butyl peroxydiethylacetate, cumyl peracetate, cumyl perpropionate, cyclohexyl peracetate, di-tert-butyl peradipate, di-tert-butyl perazelate, di-tert-butyl perglutarate, di-tert-butyl perphthalate, di-tert-butyl persebacate, 4-nitrocumyl perpropionate, 1-phenylethyl perbenzoate, phenylethyl nitroperbenzoate, tert-butyl bicyclo[2.2.1]heptane percarboxylate, tert-butyl 4-carbomethoxy perbutyrate, tert-amyl peroxy 2-ethylhexyl carbonate, tert-amyl peroxy-2-ethylhexanoate, tert-butyl cyclobutane percarboxylate, 1,4-Di(tert-butylperoxycarbo)cyclohexane, 1,1-Di(tert-butylperoxy)-3,3,5-trimethyl-cyclohexane, 1,1-Di(tert-butylperoxy)cyclohexane, tert-butyl cyclohexylperoxycarboxylate, tert-butyl cyclopentylpercarboxylate, tert-butyl cyclopropanepercarboxylate, tert-butyl dimethylpercinnamate, tert-butyl 2-(2,2-diphenylvinyl)perbenzoate, tert-butyl peroxy-2-ethylhexanoate, tert-butyl peroxy-3,5,5-trimethylhexanoate, tert-butyl 4-methoxyperbenzoate, tert-butyl peroxybenzoate, tert-butyl pernaphthoate, tert-butylperoxy isopropyl carbonate, tert-butylperoxy 2-ethylhexyl carbonate, tert-butyl pertoluate, tert-butyl 1-phenylcyclopropyl percarboxylate, tert-butyl 2-propylperpenten-2-oate, tert-butyl 1-methylcyclopropylpercarboxylate, tert-butyl 4-nitrophenylperacetate, tert-butyl nitrophenyl peroxycarbamate, tert-butyl N-succinimido percarboxylate, tert-butyl percrotonate, tert-butylpermaleic acid, tert-butyl permethacrylate, tert-butyl peroctoate, tert-butyl peroxyisobutyrate, tert-butyl peracrylate, tert-butyl perpropionate; and mixtures of these peroxides.

Particularly preferred are dibenzoyl peroxide, tert-butyl peroxy-2-ethylhexanoate, tert-amyl peroxy-2-ethylhexanoate, tert-butyl peroxydiethylacetate, 1,4-Di(tert-butylperoxycarbo)cyclohexane, tert-butyl peroxyisobutyrate, 1,1-Di(tert-butylperoxy)-3,3,5-trimethyl-cyclohexane, Methyl isobutyl ketone peroxide, 2,2-Di(4,4-di(tert-butylperoxy)cyclohexyl)propane, 1,1-Di(tert-butylperoxy)cyclohexane, tert-butyl peroxy-3,5,5-trimethylhexanoate, tert-amyl peroxy 2-ethylhexyl carbonate, 2,2-di(tert-butylperoxy)butane, tert-butylperoxy isopropyl carbonate, tert-butylperoxy 2-ethylhexyl carbonate, tert-butyl peroxyacetate, tert-butyl peroxybenzoate, di-tert-amyl peroxide and mixtures thereof.

These peroxides are preferred, because their mode of action was observed to be a compromise between polymer-chain-length-reducing degradation, which is undesirable in this instance, and the desired long chain branching.

Among the possible polymeric nucleating agents (PNA), the PPC of the present invention preferably applies the long chain branched polypropylene (LCBP), the LCBP being a high melt strength polypropylene (HMS PP) having a F30 melt strength of at least 15 cN, determined at 200°C according to ISO 16790:2021 and a melt extensibility v30 of at least 200 m/s, determined at 200°C according to ISO 16790:2021.

Further, as stated above, the polypropylene composition (PPC) essentially comprises a non-polymeric beta-nucleating agent (BNA). The BNA is essentially comprised in the PPC, based on the total weight of the PPC, in an amount of 0.0001 to 0.1000 wt.-% (1 ppm to 1000 ppm), preferably up to 500 ppm, more preferably up to 100 ppm, still more preferably up to 50 ppm, yet more preferably up to 20 ppm, still more preferably up to 10 ppm. Such contents of the BNA represent a reasonable content sufficient to achieve the desired technical effects.

The term "non-polymeric beta-nucleating agent" refers to any non-polymeric nucleating agent which is suitable for inducing crystallisation of a propylene polymer in the hexagonal or pseudohexagonal beta-modification (hereinafter also simply referred to as "beta-nucleating agent"). Mixtures of such nucleating agents may also be employed.

Suitable types of beta-nucleating agents are dicarboxylic acid derivative type diamide compounds from C5-C8-cycloalkyl monoamines or C6-C12-aromatic monoamines and C5-C8-aliphatic, C5-C8-cycloaliphatic or C6-C12-aromatic dicarboxylic acids, e.g. N,N’-di-C5-C8-cycloalkyl-2,6-naphthalene dicarboxamide compounds such as N,N’-dicyclohexyl-2,6-naphthalene dicarboxamideand N,N’-dicyclooctyl-2,6-naphthalene dicarboxamide, N,N’-di-C5-C8-cycloalkyl-4,4-biphenyldicarboxamide compounds such as N,N’-dicyclohexyl-4,4-biphenyldicarboxamide and N,N’-dicyclopentyl-4,4-biphenyldicarboxamide, N,N’-di-C5-C8-cycloalkyl-terephthalamide compounds such as N,N’-dicyclohexylterephthalamide and N,N’-dicyclopentylterephthalamide, N,N’-di-C5-C8-cycloalkyl-1,4-cyclohexanedicarboxamide compounds such as N,N’-dicyclohexyl-1,4-cyclohexanedicarboxamide and N,N’-dicyclohexyl-1,4-cyclopentanedicarboxamide, diamine derivative type diamide compounds from C5-C8-cycloalkyl monocarboxylic acids or C6-C12-aromatic monocarboxylic acids and C5-C8-cycloaliphatic or C6-C12-aromatic diamines, e.g. N,N’-C6-C12-arylene-bis-benzamide compounds such as N,N’-p-phenylene-bis-benzamide and N,N’-1,5-naphthalene-bis-benzamide, N,N’-C5-C8-cycloalkyl-bis-benzamide compounds such as N,N’-1,4-cyclopentane-bis-benzamide and N,N’-1,4-cyclohexane-bis-benzamide, N,N’-p-C6-C12-arylene-bis-C5-C8-cycloalkylcarboxamide compounds such as N,N’-1,5-naphthalene-bis-cyclohexanecarboxamide and N,N’-1,4-phenylene-bis-cyclohexanecarboxamide, and N,N’-C5-C8-cycloalkyl-bis-cyclohexanecarboxamide compounds such as N,N’-1,4-cyclopentane-bis-cyclohexanecarboxamide and N,N’-1,4-cyclohexane-bis-cyclohexanecarboxamide, amino acid derivative type diamide compounds from amidation reaction of C5-C8-alkyl, C5-C8-cycloalkyl- or C6-C12-arylamino acids, C5-C8-alkyl-, C5-C8-cycloalkyl- or C6-C12-aromatic monocarboxylic acid chlorides and C5-C8-alkyl-, C5-C8-cycloalkyl- or C6-C12-aromatic mono-amines, e.g. N-phenyl-5-(N-benzoylamino)pentane amide and N-cyclohexyl-4-(N-cyclohexyl-carbonylamino)benzamide.

Further suitable beta-nucleating agents are quinacridone type compounds, e.g. 5,12-dihydro-quino[2,3-b]acridine-7,14-dione (i.e. quinacridone), dimethylquinacridone and dimethoxyquinacridone, quinacridonequinone type compounds, e.g. quino[2,3-b]acridine-6,7,13,14(5H,12H)-tetrone (i.e. quinacridonequinone), and dimethoxyquinacridonequinone and dihydroquinacridone type compounds, e.g. 5,6,12,13-tetrahydroquino[2,3-b]acridine-7,14-dione (i.e. a dihydroquinacridone), dimethoxydihydroquinacridone and dibenzodihydroquinacridone.

Still further suitable beta-nucleating agents are dicarboxylic acid salts of metals from group IIa of periodic table, e.g. pimelic acid calcium salt and suberic acid calcium salt; and mixtures of dicarboxylic acids and salts of metals from group IIa of the periodic table.

Still further suitable beta -nucleating agents are salts of metals from group IIa of periodic system and imido acids of the following formula

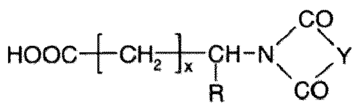

wherein x = 0 to 4; R = H, -COOH, C1-C12-alkyl, C5-C8-cycloalkyl or C6-C12-aryl, and Y = C1-C12-alkyl, C5-C8-cycloalkyl or C6-C12-aryl - substituted bivalent C6-C12-aromatic residues, e.g. calcium salts of phthaloylglycine, hexahydrophthaloylglycine, N-phthaloylalanine, phthalimidoacetate and/or N-4-methylphthaloylglycine.

Preferred beta-nucleating agents are any one or mixtures of N,N’-dicyclohexyl-2,6-naphtalene dicarboxamide, the beta-nucleating agents of EP 177961 and those of EP 682066.

Particularly preferred beta-nucleating agents are any one or mixtures of 5,12-dihydro-quino[2,3-b]acridine-7,14-dione (CAS 1047-16-1) (i.e. quinacridone), quino[2,3-b]acridine-6,7,13,14(5H,12H)-tetrone (CAS 1503-48-6) (i.e. quinacridonequinone), 5,6,12,13-tetrahydroquino[2,3-b]acridine-7,14-dione (CAS 5862-38-4) (i.e. a dihydroquinacridone), N,N’-dicyclohexyl-2,6-naphtalene dicarboxamide (CAS 153250-52-3) and salts of dicarboxylic acids with at least 7 carbon atoms with metals of group IIa of the periodic table, preferably calcium pimelate (CAS 19455-79-9).

A still more preferred beta-nucleating agent is a mixture of 5,12-dihydro-quino[2,3-b]acridine-7,14-dione (CAS 1047-16-1), quino[2,3-b]acridine-6,7,13,14(5H,12H)-tetrone (CAS 1503-48-6) and 5,6,12,13-tetrahydroquino[2,3-b]acridine-7,14-dione (CAS 5862-38-4), which is commercially available as Cinquasia® Gold L 2929 (former Gold YT-923-D) from BASF. This beta-nucleating agent is especially preferred as beta-nucleating agent because it has a very high activity and is very inexpensive.

Thus, in a preferred mode of the invention, the PPH is nucleated by a long chain branched polypropylene (LCBP) (HMS PP) as polymeric nucleating agent (PNA) and by a mixture of 5,12-dihydro-quino[2,3-b]acridine-7,14-dione (CAS

1047-16-1), quino[2,3-b]acridine-6,7,13,14(5H,12H)-tetrone (CAS 1503-48-6) and 5,6,12,13-tetrahydroquino[2,3-b]acridine-7,14-dione (CAS 5862-38-4), as beta-nucleating agent.

The PPC may further comprise, based on the total weight of the PPC, less than 5.0 wt.-%, preferably 0.010 to 3.50 wt.-%, more preferably 0.025 to 2.5 wt.-%, more preferably 0.0500 to 1.2500 wt.-% (500 to 12500 ppm), more preferably 0.1500 to 1.0000 wt.-% (1500 to 10000 ppm), most preferably 0.2500 to 0.8500 wt.-% (2500 to 8500 ppm), other components such as additive(s), said additive(s) being preferably selected from the group consisting of antioxidants, acid scavenges, UV-stabilizers, antistatic agents, and slip agents and mixtures thereof. Notably, it is possible that two or more functions can be combined in the same molecule and such a constitution may be preferred to reduce the overall amount of additives. The additive(s) may be added to the composition in pure form or in the form of a masterbatch in a carrier resin in which case the content of the carrier resin is calculated as the content of the additive(s). Where applicable and appropriate, the additive(s) may already be added during the polymerization of the PPH. Preferably, at least antioxidant(s), more preferably at least antioxidant(s) and acid scavenger(s), are present as additive(s). Such additives are well known in the art and ensure favorable stability and/or performance of the polypropylene composition in its designated application.

As stated above, the PPC preferably includes antioxidant(s) as a stabilizing additive. The antioxidant(s) is preferably present in an amount of 2.500 wt.-% or less, more preferably 1.500 wt.-% or less, such as preferably 0.0100 to 1.2500 wt.-% (100 to 12500 ppm), more preferably 0.0500 to 1.1000 wt.-% (500 to 11000 ppm), even more preferably 0.1500 to 1.0000 wt.-% (1500 to 10000 ppm), most preferably 0.2500 to 0.8000 wt.-% (2500 to 8000 ppm) based on the total weight of the PPC.

The antioxidant(s) is not specifically limited and include those known in the art such as sterically hindered phenols, phosphites and thioesters and their synergistic combinations. Moreover, in multifunctional stabilizers, several functions can be combined in the same molecule, and a widely used combination are sterically hindered phenols with sulfur substituents or sterically hindered phenols with copper chelating function (metal deactivators), such as Irganox® 1035, Irganox® 565, Irganox® 1520 L, Irganox® MD 1024.

Further examples of antioxidants are sterically hindered phenols (such as CAS No. 6683-19-8, e.g. Irganox 1010 (FF)™ by BASF), phosphorous based antioxidants (such as CAS No. 31570-04-4, also sold as Flostanox PAR 24 (FF)™ by Clariant, or Irgafos 168 (FF)™ by BASF), sulphur based antioxidants (such as CAS No. 693-36-7, sold as Irganox PS-802 (FF)™ by BASF), nitrogen-based antioxidants (such as 4,4'-bis(1 ,T-dimethylbenzyl)diphenylamine), or antioxidant blends.

Preferably, the antioxidant(s) includes, more preferably is, a phenolic-type antioxidant(s), such as 2,6-di-tert-butyl-4-methyl phenol and/or, preferably and, pentaerythrityl-tetrakis(3-(3',5'-di-tert-butyl-4-hydroxyphenyl)-propionate.

As stated above, the PPH preferably includes acid scavenger(s) as stabilizing additive. The acid scavenger(s) is preferably present in an amount of 0.5000 wt.-% or less, more preferably 0.2500 wt.-% or less, such as preferably 0.0010 to 0.0750 wt.-% (10 to 750 ppm), more preferably 0.0015 to 0.0500 wt.-% (15 to 500 ppm), more preferably 0.0025 to 0.0250 wt.-% (25 to 250 ppm), most preferably 0.0050 to 0.0125 wt.-% (50 to 125 ppm) based on the total weight of the PPC. The acid scavenger(s) preferably includes, more preferably is, stearate-based acid scavenger(s), most preferably calcium stearate.

The PPC may include other optional other components such as at least one selected from the group consisting of lubricants, utilization agents, polymer additives, fillers, coloring agents, and processing aids. Such optional other ingredients are not necessary to attain the technical effects of the present invention, but may fine-tune certain characteristics in case of individual need and may therefore be added under the premise not to impair with attaining the above described and claimed essential characteristics of the BOPP. If not necessary, the such optional other components are not present and if present, their amount is usually 4.5000 wt.-% or less, preferably 2.5000 wt.-% or less, 0.7500 wt.-% or less, more preferably 0.1500 wt.-% or less, most preferably less than 0.0500 wt.-% based on the total weight of the PPC.

In summary, the PPC preferably include at least antioxidant(s) and acid scavenger(s), and may include additional stabilizer and/or modifying additive(s), such as e.g. UV-stabilizer(s), and metal deactivator(s), and mixtures thereof, and wherein two or more functions can be combined in the same molecule. However, given the application of the BOPP film in a conductor, the PPC preferably does not essentially contain slip agent(s), antiblocking agent(s) and/or antistatic agent(s) as additive(s).

The methods to prepare a polypropylene composition represent common knowledge and the polypropylene composition (PPC) of the present invention can for instance be obtained by melt mixing the isotactic crystalline polypropylene homopolymer (PPH) with the polymeric nucleating agent (PNA), the non-polymeric beta-nucleating agent (BNA) and other components such as additive(s) as described above. Further, the other components such as additive(s) may in the individual case be added already during the polymerization of the PPH and/or the polymeric nucleating agent (PNA) may be incorporated into the PPH as a polymer fraction by prepolymerization. The mixing of such components may be made in one or more steps. For mixing, a conventional compounding or blending apparatus, such as e.g. a Banbury® mixer, a 2-roll rubber mill, Buss-co-kneader, a single screw extruder with special mixing segments or a twin screw extruder may be used. The PPC recovered from e.g. the extruder can be in the form of pellets or in a powdery state.

**Process for producing BOPP film**

The present invention further provides a process for producing a BOPP film comprising the steps of:

(A) extruding the polypropylene composition (PPC) as defined above to a flat film (non-stretched non-oriented film),
(B) orienting the flat film in the machine direction orientation (MDO) and in the transverse direction orientation (TDO) to obtain a BOPP film having an area stretch ratio, which is obtained by multiplying the machine direction orientation (MDO) stretch ratio and the traverse direction orientation (TDO) stretch ratio, of 50 to 75.

That is, the BOPP film attained by this process is a BOPP film having a high area stretch ratio as described above, wherein the process uses the polypropylene composition as defined above, so that a further description thereof is dispensable at this point.

Preferably, the BOPP film is made by applying

a melt temperature in the range of 240.0 to 260.0°C, preferably 245.0 to 255.0°C, more preferably 248.0 to 252.0°C, and/or, preferably and,
a chill roll temperature in the range of 80.0 to 100.0°C, preferably 85.5 to 95.0°C, more preferably 88.0 to 92.0°C, and/or, preferably and,
a machine direction orientation (MDO) temperature in the range of 135.0 to 155.0°C, preferably 140.0 to 150.0°C, more preferably 143.0 to 147.0°C, and/or, preferably and
a transverse direction orientation (TDO) temperature in the range of 172.0 to 195.0°C, preferably 177.0 to 192.0°C, more preferably 180.0 to 190.0°C, more preferably by applying
a melt temperature in the range of 245.0 to 255.0°C, preferably 248.0 to 252.0°C,
a chill roll temperature in the range of 85.5 to 95.0°C, preferably 88.0 to 92.0°C,
a machine direction orientation (MDO) temperature in the range of 140.0 to 150.0°C, preferably 143.0 to 147.0°C, and a transverse direction orientation (TDO) temperature in the range of 177.0 to 192.0°C, more preferably 180.0 to 190.0°C. Such conditions are particularly suitable to attain a BOPP film of the present invention.

According to the present invention, it is essential that the BOPP film has an area stretch ratio, which is obtained by multiplying the machine direction orientation (MDO) stretch ratio and the traverse direction orientation (TDO) stretch ratio, of 50 to 75, as obtained from stretching the flat film. The area stretch ratio is preferably 56 to 75, such as 63±3. Further, the flat film is preferably oriented by a stretching ratio of 5.5 to 8.0, more preferably 6.0 to 7.5, such as 6.0 or 7.0 in the MDO and 8.0 to 10.0, preferably 8.5 to 9.5, such as 9.0 in the TDO, to obtain the BOPP having a stretching ratio of 5.5 to 8.0, more preferably 6.0 to 7.5, such as 6.0 or 7.0 in the MDO and 8.0 to 10.0, preferably 8.5 to 9.5, such as 9.0 in the TDO. Such drawing conditions, such as MDO × TDO = 6.0 × 9.0 and especially MDO × TDO = 7.0 × 9.0 are particularly suitable to attain the BOPP film of the present invention being increased in MDO stiffness and electric break down strength, while keeping the surface roughness Ra constant.

Preferably, the orientation of the flat film in the MDO and in the TDO to obtain the BOPP film having the required area stretch ratio is conducted in a sequential process. However, it is also possible to apply a simultaneous stretching process.

The BOPP film for capacitor can be prepared by conventional drawing processes known in the art. Accordingly, the process for the manufacture of the BOPP film for capacitor according to this invention comprises the use of the polypropylene composition as defined herein and forming it into a film preferably by the tenter method known in the art.

The tenter method is in typically a method in which the polypropylene composition is melt extruded from a slit die such as a T-die and cooled on a cooling drum (chill roll) obtaining an non-oriented film (flat film, precursor film). Said film is preheated for example with a heated metal roll and then drawn in the length direction (MDO) between a plurality of rolls over which a difference in peripheral speeds is established and then both edges are gripped with grippers and the sheet is drawn in the transverse direction (TDO) in an oven by means of a tenter resulting in a biaxially drawn film. The temperature of said stretched sheet during the longitudinal drawing is preferably controlled as described above. Such a drawing process is described for instance in WO 2020/127862 A1 and details about the drawing conditions and the drawing apparatus can be found in this reference, the respective content being incorporated herein by reference.

Subsequently, the BOPP film for capacitor can be treated by corona discharge in air, nitrogen, carbon dioxide gas or any of the mixtures on the surface to be metalized, to improve the adhesive strength to the metal to be deposited, and wound by a winder.

**Use of polypropylene composition, metal laminated film and capacitor**

The present invention relates to the use of the polypropylene composition (PPC) as described above to

manufacture a BOPP film for a capacitor film having an area stretch ratio, which is obtained by multiplying the machine direction orientation (MDO) stretch ratio and the traverse direction orientation (TDO) stretch ratio, of 50 to 75, preferably 56 to 75, such as 63±3, to manufacture a metal laminated film comprising said BOPP film and to manufacture a metal film provided on at least one surface of the BOPP film, or to manufacture a capacitor comprising said BOPP film for a capacitor as a layer of an insulation film.

The present invention further provides a metal laminated film for capacitor comprising the BOPP film of the present invention as described above, and a metal film provided on at least one surface of the BOPP film.

There are two typical types of metal laminated film for capacitor and the two BOPP capacitor types are called film-foil capacitor and metallized film capacitor. The metal laminated film for capacitor can be prepared by conventional processes known in the art and, more specifically, the metallized film carries a metal film that was deposited by e.g. chemical vapor deposition (CVD) and the film-foil set up uses an extra metal foil.

The present invention further provides a capacitor comprising an insulation film comprising a layer of the BOPP film of the present invention as described above.

The present invention further provides the use of the polypropylene composition as described above to manufacture a BOPP film for a capacitor, a metal laminated film comprising the BOPP film and a metal film provided on at least one surface of the BOPP film, or a capacitor comprising said BOPP film for a capacitor as a layer of an insulation film.

That is, the BOPP film of the present invention can be employed in capacitor films. In such cases, the capacitor film comprises at least 80.0 wt.-%, more preferably at least 90.0 wt.-%, yet more preferably at least 99.0 wt.-% of the BOPP film. In an especially preferred embodiment, the capacitor film consists of the BOPP film according to this invention.

## Examples

The following Examples are included to demonstrate certain aspects and favorable embodiments of the invention as described in the claims. It should be appreciated by those of skill in the art, however, that the following description is illustrative only and should not be taken in any way as a restriction of the invention. Nevertheless, values, such as properties and conditions, disclosed in the Examples may be combined with ranges disclosed in a more general context (e.g. claims or general description) to give new (more limited or different) ranges without any limitation.

## 1. Measuring methods

The following definitions of terms and determination methods apply for the above general description of the invention as well as to the below examples unless otherwise defined.

### Melt flow rate (MFR)

Melt flow rate $MFR_2$ was measured according to ISO 1133 (230°C, 2.16 kg load).

### Melt strength and melt extensibility

The test described herein follows ISO 16790:2021.

The strain hardening behaviour was determined by the method as described in the article "Rheotens-Mastercurves and Drawability of Polymer Melts", M. H. Wagner, Polymer Engineering and Sience, Vol. 36, pages 925 to 935. The content of the document is included by reference. The strain hardening behaviour of polymers is analysed by Rheotens apparatus (product of Göttfert, Siemensstr.2, 74711 Buchen, Germany) in which a melt strand is elongated by drawing down with a defined acceleration.

The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder HAAKE Polylab system and a gear pump with cylindrical die (LID = 6.0/2.0 mm). For measuring F30 melt strength and v30 melt extensibility, the pressure at the extruder exit (= gear pump entry) is set to 30 bars by by-passing a part of the extruded polymer. For measuring F200 melt strength and v200 melt extensibility, the pressure at the extruder exit (= gear pump entry) is set to 200 bars by by-passing a part of the extruded polymer.

The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks.

The acceleration of the wheels was small enough so that the tensile force was measured under quasi-steady conditions. The acceleration of the melt strand (2) drawn down is 120 mm/sec2. The Rheotens was operated in combination with the PC program EXTENS. This is a real-time data-acquisition program, which displays and stores the measured data of tensile force and drawdown speed. The end points of the Rheotens curve (force versus pulley rotary speed), where the polymer strand ruptures, are taken as the F30 melt strength and v30 melt extensibilty values, or the F200 melt strength and v200 melt extensibilty values, respectively.

**Xylene cold soluble content (XCS, wt.-%)**

The amount of the polymer soluble in xylene was determined at 25°C according to ISO 16152:2022.

**GPC (Mw, Mn, MWD)**

Number average molecular weight (Mn), weight average molecular weight (Mw) and polydispersity (Mw/Mn, MWD) were determined by Gel Permeation Chromatography (GPC) according to the following method:
The number average molecular weight (Mn), the weight average molecular weight Mw, and the polydispersity (Mw/Mn, wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscometer was used with 3×TSK-gel columns (GMHXL-HT) from TosoHaas and 1,2,4-trichlorobenzene (TCB, stabilized with 200 mg/L 2,6-di tert butyl-4-methyl-phenol) as solvent at 145°C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well-characterized broad polypropylene standards. All samples were prepared by dissolving 5-10 mg of polymer in 10 mL (at 160°C) of stabilized TCB (same as mobile phase) and keeping for 3 hours with continuous shaking prior sampling in into the GPC instrument.

**Quantitative nuclear-magnetic resonance (NMR) spectroscopy used to quantify the isotacticity of polypropylene homopolymer**

Quantitative nuclear-magnetic resonance (NMR) spectroscopy was used to quantify the isotacticity of the polypropylene homopolymer.

Quantitative $^{13}C\{^1H\}$ NMR spectra were recorded in solution-state using a Bruker Advance III 400 NMR spectrometer operating at 400.15 MHz and 100.62 MHz for $^1H$ and $^{13}C$ respectively. All spectra were recorded using a $^{13}C$ optimized 10 mm extended temperature probehead at 125°C using nitrogen gas for all pneumatics.

For polypropylene homopolymers, approximately 200 mg of material was dissolved in *1,2*-tetrachloroethane-$d_2$ (TCE-$d_2$). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilizing the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For polypropylene homopolymers all chemical shifts are internally referenced to the methyl isotactic pentad (mmmm) at 21.85 ppm.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

The isotacticity was determined at the pentad level and reported as the percentage of isotactic pentad (mmmm) sequences with respect to all pentad sequences:

$$[mmmm]\ \% = 100 * (mmmm / \text{sum of all pentads})$$

**Rheology (polydispersity index PI)**

Small-amplitude oscillatory shear (SAOS) rheology experiments were done with the Anton Paar MCR501-CTD600 rheometer in nitrogen atmosphere, using a parallel plate setup (gap 1.3 mm, 25 mm diameter), following ISO 6721-1. Specimens of circular shape with a diameter of 25 mm and thickness of 2 to 3 mm were prepared first by compression molding (200°C, load of 100 kg·cm$^{-2}$) of the polymer samples. Specimens were placed between the plates, heated to the measurement temperature (220°C) and after removing excess material (trimming) the specimen was kept at the measurement temperature for another five minutes before the experiment begun. Frequency sweeps were done in the linear viscoelastic regime (strain 2-7 %) applying frequencies $\omega$ within $10^3$ to $10^{-2}$ rad·s$^{-1}$.

The zero shear viscosity was obtained as the fitting parameter $\eta_0$ of a Carreau-Yasuda fit to the magnitude of the complex shear viscosity |η*| plotted as function of frequency (rad·s$^{-1}$)

$$\eta = \eta_\infty + (\eta_0 - \eta_\infty)[1 + (\lambda\omega)^a]^{\frac{n-1}{a}}$$

where $\eta$ is the shear visosity (Pa·s), $\eta_\infty$ is the infinite-shear viscosity plateau (set to zero, Pa·s). $\eta_0$ is the zero-shear viscosity plateau (Pa·s), λ is an average relaxation time (obtained in seconds when shear frequency is expressed in Hz), *n* is the power law index describing the slope of the shear thinning power law section (slope = n-1) and parameter a describes the width of the transition from zero-viscosity plateau to power law behaviour.

The polydispersity index PI (Pa$^{-1}$) is defined as the inverse of the crossover modulus, Gc. The crossover modulus is the modulus level where elastic modulus of the melt (also called "storage modulus" G') and viscous (loss) modulus G" have the same value. PI = 1/Gc * 10^5.

**Surface Roughness (Ra)**

*Stylus profilometer measurement.* 1D line profiles ($Z_i$ vs $x_i$ data sets) were measured with a stylus profilometer (MarSurf GD 25 measuring station, cantilever RHT 6-50:1, diamond tip with radius of 3 μm, Mahr GmbH, Göttingen). The vertical resolution of this equipment as claimed by Mahr is 0.5 nm. The measuring station is controlled via the software MahrWin. A typically roughness measurement requires to select a certain condition set (in turn given by a Norm). The following settings were used. Scanning speed of 0.5 s·mm$^{-1}$, force of 0.5 N, measuring length $L_M$ = 5.6 mm, sampling interval 0.5 μm (11200 measurement points on 5.6 mm). Each measurement was repeated five times at six locations, namely at the two outer sides and in the center, and this was done on both film sides. The BOPP film has a side that developed by stretching from the primary sheet side that was formerly in contact with the chill roll, while the other opposite side of the film is the air side. All statistical data and roughness parameters disclosed herein are from the 1D roughness profiles recorded on the air side. For each measurement, film specimens were placed on cylindrical slab of glass as solid support and ensuring intimate contact between the film and the glass substrate, to avoid air inclusions.

*Raw data processing.* The software MahrWin performs post processing of the raw profile data. These postprocessing steps are part of the selected condition set. Post processing done by the software included removal of the first and final 0.8 mm of the recorded profile, resulting in an effective profile evaluation length $L_E$ = 4.0 mm. The profile was centred on zero, by subtracting the arithmetic mean *m* (of the original $Z_i$ population) from each $Z_i$ to make the new mean zero. The waviness of the profile was removed to straighten the mean line. MahrWin refers to "Grenzwellenlänge" (cut off wavelength $\lambda_c$) above which the amplitude is removed. The cut-off wavelength is a seventh of the total measuring length, the latter thus being $L_M = 7 \cdot \lambda_c$ and $L_E = 5 \cdot \lambda_c$ and so, $\lambda_c$ = 0.8 mm in this work. The reason for these relationships is that waviness affects some of the roughness parameters, and to calculate some of them requires to divide $L_E$ into five subsections. For example, the maximum roughness depth $R_{max}$, is the largest vertical deviation in the profile among five sub-section of $L_E$. For $L_E$ = 4 mm, the length a subsection thus is 0.8 mm. Waviness with amplitude larger than this cause misleadingly large $R_{max}$ differences between the subsections.

*Data evaluation.* The $Z_i$ vs $x_i$ data sets recorded by a stylus profilometer are discrete data, the height deviation $Z_i$ at a discrete lateral position $x_i$, instead of a continuous roughness function z(x). Moreover, the stylus does not measure the roughness height, but the height of the surface at point $x_i$. The originally recorded $Z_i$ data is therefore the roughness height $z_i$ plus a background height $B_i$ (i.e. $Z_i = z_i + B_i$).

Roughness parameters obtained from discrete data are an approximation, below indicated by "≈" (almost equal to). The average roughness parameter for 1D profile data is "$R_a$", the mean centre line deviation (of $Z_i$).

$$R_a \approx \frac{1}{n}\sum_{i=1}^{n}|Z_i - m| \qquad (1)$$

and the mean m of the profile is the arithmetic mean of $Z_i$ values.

$$m \approx \frac{1}{n}\sum_{i=1}^{n} Z_i \qquad (2)$$

**Electrical breakdown strength**

The dielectric breakdown strength was determined in general agreement with DIN IEC 60243-2 using direct current (DC), voltage ramp rate of 250 V/s and active electrode area of 2.84 $cm^2$ which follows from the cylindrically shaped electrode diameter (2.5 cm) reduced by 0.6 cm because of a 0.3 cm edge radius (Cylinder / Plate setup of IEC 60243-1 and -2).

The IEC 60243-2 standard electrode design was used with the modification of placing the BOPP film between the upper cylinder electrode and a pad foamed elastomer (e.g a mousepad) wrapped with alumina foil placed on the ground electrode.

On each BOPP film, the breakdown strength was measured 50 times as described in the following. The 50 breakdown measurements were distributed over a BOPP film area of approximately 2.5 $m^2$ by measuring according to a 10 $\times$ 5 grid, i.e. a row of 10 breakdowns across the TD width and in total measuring 5 such rows along MD of the BOPP film.

To accomplish this measurement plan, BOPP film specimens were cut from the 50 grid positions, and broken down individually with the electrode design as described above. The film side opposite of the chill roll was facing the upper electrode. Breakdowns outside the active electrode area via a spark were discarded. After a breakdown had occurred the film thickness was measured three times around the breakdown hole and averaged. The breakdown (field) strength Eb (kV/mm) is voltage at breakdown (kV) divided by averaged specimen thickness d (mm). The average electric breakdown strength (Table 3) is the arithmetic mean of the 50 so obtained Eb results.

**Tensile modulus**

The tensile modulus (TM) (MPa) was measured in machine direction (MD) and transverse direction (TD) according to ISO 527-3 on stretched film samples with film thickness of about 4 $\mu$m and at a cross head speed of 1 mm/min for the modulus.

**Tensile strength**

The tensile strength was measured in machine direction (MD) and transverse direction (TD) according to ISO 527-1/2 at 23°C and 50% relative humidity with Alwetron R24, 1kN load cell. Tensile testing speed was 50mm/min, grip distance was 50 mm and gauge length was 20 mm.

**2. Experimental Examples**

An isotactic crystalline polypropylene homopolymer PPH was produced as disclosed in WO 2013/004781 A1, using diluent-slurry conditions (reactor cascade of five continuously stirred reactors, CSTR) and a commercial Ziegler Natta catalyst ("Lynx®900"). The PPH was made using 2500 ppm (relative to the catalyst) of methyl methacrylate (MMA) as donor to achieve high pentad isotacticity. Regarding the reactor split, the PPH was composed of 30 wt.-% of polymer (melt flow rate, MFR below 1.0 g/10 min, 230°C, 2.16 kg) made in the first reactor and of 70 wt.-% of polymer (MFR > 50 g/10min, 230°C, 2.16 kg) made in the remaining four reactors. The properties of the isotactic crystalline polypropylene homopolymer PPH are shown in Table 1.

**Table 1**

| Name | PI $Pa^{-1}$ | *mmmm* % | XCS % | $M_w$ kg·$mol^{-1}$ | $M_w/M_n$ - | MFR g·10 $min^{-1}$ |
|---|---|---|---|---|---|---|
| PPH | 6.18 | 97.0 | 1.36 | 374 | 9.4 | 3.36 |

The PPH was compounded with additives, which is a mixture of 5500 ppm of sterically hindered phenol-based antioxidants and 70 ppm of a metal stearate. The isotactic crystalline polypropylene homopolymer P-IE compounded with said additives (98.9995 wt.-%) was further compounded with 1.0 wt.-% of a long chain branched polypropylene acting as polymeric nucleating agent (PNA) and 5 ppm (0.0005 wt.-%) of a non-polymeric beta-nucleating agent (commercially available beta-nucleating agent Cinquasia® Gold L 2929, which is a substituted quinacridone-based pigment) by mixing in a twin screw extruder to provide a polypropylene composition (PPC).

The long chain branched polypropylene (PNA) was prepared from a linear propylene homopolymer powder (which is a linear propylene homopolymer powder with $MFR_2$ of 0.6 g/10min and isotactic pentads in the range of 91 - 93%,

commercially available as HA001A-B1 from Borealis), by a reactive extrusion in the presence of butadiene and peroxide as described in the following. Both the butadiene and the peroxide (75% solution of tert-butylperoxy isopropyl carbonate "Trigonox BPIC-C75" of Akzo Nobel) were pre-mixed with the linear PP powder (resulting in a peroxide concentration of 0.625 wt.-% and butadiene concentration of 1.6 wt.-%, based on the weight of the linear PP powder) before the melt-mixing step in a horizontal mixer with paddle stirrer at a temperature of 65°C, maintaining an average residence time of 15 to 20 minutes. The pre-mixture was transferred under inert atmosphere to a co-rotating twin screw extruder of the type Theyson TSK60 having a barrel diameter of 60 mm and an L/D-ratio of 48 equipped with a high intensity mixing screw having 3 kneading zones and a two-step degassing setup. The final long chain branched polypropylene had an $MFR_2$ of 2.1 g/10min, a F30 melt strength of 36 cN and a v30 melt extensibility of 260 mm/s.

The polymer composition PPC was biaxially stretched to give the films of CE, IE1, and IE2 having a thickness of about 4 μm, respectively. The biaxial stretching was done using continuous two-step sequential drawing on a pilot scale line (Brückner GmbH, Siegsdorf, Germany) including a MDO (machine direction orientation) unit installed between the cast film extrusion and the tenter frame.

The PPC were first extruded through a rectangular die (set melt temperature 250°C, cylinder temperature in Table 2) and then cast onto a chill roll (CR) set to a temperature of 90°C to give primary cast sheets with a thickness of 150 μm (CE), 180 μm (IE1), respectively 200 μm (IE2). The so formed primary (cast) sheets were then stretched by a factor 5.0 (CE, speed 50 m/min), 6.0 (IE1, speed 60 m/min) or 7.0 (IE2, speed 70 m/min) in machine direction (MD) via a set of rolls comprised of heating, drawing and annealing rolls. More specifically, the cast sheets were continuously fed into the MDO unit which consisted of 12 rolls, of which the first six were heated from 95 to 124°C to pre-heat the film, the subsequent two were held at 145°C for drawing and the last four are held between 122-136°C for annealing. The actual MD draw step was done at 145°C. The uniaxially drawn film was then fed to a tenter frame (installed in an oven) and was then stretched by a factor 9.0 in traverse direction (TD). In the tenter operation, the MD clip-to-clip distance was constant and the MDO film was only drawn in TD in the diverging draw zone of the tenter. The oven uses several different temperature zones for pre-heating, drawing, film relaxation and annealing. The draw temperature was 179°C (CE), 179°C (IE1) or 185°C (IE2), which is the air temperature in the first section of the preheating zone. Table 2 summarizes most important process settings.

| Table 2 | CE | IE1 | IE2 |
|---|---|---|---|
| Cylinder temperature (°C) | 250 | 250 | 250 |
| Chill roll temperature (°C) | 90 | 90 | 90 |
| MDO temperature (°C) | 145 | 145 | 145 |
| MDO Annealing temperature (°C) | 136 | 136 | 136 |
| TDO temperature (°C) | 179 | 179 | 185 |
| TDO stretch ratio | 9 | 9 | 9 |
| MDO stretch ratio | 5 | 6 | 7 |
| Stretch area | 45 | 54 | 63 |
| BOPP Speed (m/min) | 50 | 60 | 70 |

Hence, the cylinder temperature (set melt temperature in the extruder) was kept constant like the chill roll temperature, the MDO stretch temperature and the MDO annealing temperature. However, the MDO stretch ratio and the TDO temperature were varied. Since the line speed of the cast film multiplies in the MDO step (by factor 5, 6 or 7) with increased MDO stretch ratio, the heating time in the TDO oven decreases before the actual TDO stretch occurs, so that the TDO temperature was increased from 179°C to 185°C for IE2 to obtain sufficient increase of the film temperature for TDO stretching.

The properties of the resultant films are summarized in below Table 3.

| Table 3 | CE | IE1 | IE2 |
|---|---|---|---|
| TM MD (MPa)<br>TS MD (MPa) | 2823<br>191 | 3040<br>231 | 3290<br>237 |
| | | | |
| TM TD (MPa)<br>TS TD (MPa) | 4065<br>264 | 4074<br>262 | 3778<br>265 |

(continued)

| Table 3 | CE | IE1 | IE2 |
|---|---|---|---|
| | | | |
| Average Tensile Modulus ((TM MD+ TM TD)/2) (MPa) | 3444 | 3557 | 3534 |
| TM TD/TM MD ratio<br>Average Tensile Strength ((TS MD+TS TD)/2) (MPa) | 1.44<br>228 | 1.34<br>246 | 1.15<br>251 |
| TS TD/TS MD ratio | 1.38 | 1.13 | 1.12 |
| | | | |
| Average electric breakdown (kV/mm) | 539.9 | 618.2 | 631.5 |
| | | | |
| Thickness (μm) | 3.7 | 4.0 | 3.8 |
| | | | |
| Center Roughness Ra (μm) | 0.085 | 0.064 | 0.068 |

As apparent from Table 3 and Figs. 1a to 1c, by using a polypropylene composition (PPC) comprising an isotactic crystalline polypropylene homopolymer (PPH) having high isotacticity and broad PI and being double nucleated (HMS PP + quinacridone) and by increasing the stretch area to 50 or more (by increasing in the MDO stretch from 5 to 6 or 7, it is unexpectedly possible to boost the final BOPP film properties to increase the mechanical properties such as the MDO tensile modulus and tensile strength and the electric break down strength while keeping the film roughness (Ra) constant. Especially by increasing the stretch area to 60 or more (by increasing in the MDO stretch to 7), the increase in MDO tensile modulus and tensile strength and the electric break down strength is even more pronounced.

**Claims**

**1.** A biaxially oriented polypropylene (BOPP) film for capacitor containing a polypropylene composition (PPC) comprising, based on the total weight of the PPC, 94.9999 to 99.9990 wt.-% of an isotactic crystalline polypropylene homopolymer (PPH) having

a pentad isotacticity <mmmm>, as determined by quantitative nuclear-magnetic resonance (NMR), in the range of 95.5 to 99.0%, preferably 96.0 to 98.0%, more preferably 96.5 to 97.5%, and
a polydispersity index (PI), determined according to the description, in the range of 5.50 to 6.75 $Pa^{-1}$, preferably 5.75 to 6.50 $Pa^{-1}$, more preferably 5.95 to 6.30 $Pa^{-1}$;

0.0001 to 5.0000 wt.-% of a polymeric nucleating agent (PNA),
0.0001 to 0.1000 wt.-% of a non-polymeric beta-nucleating agent (BNA),

wherein the BOPP film has an area stretch ratio, which is obtained by multiplying the machine direction orientation (MDO) stretch ratio and the traverse direction orientation (TDO) stretch ratio, of 50 to 75.

**2.** The BOPP film for capacitor according to claim 1,
wherein the MDO stretch ratio is 5.5 to 8.0, preferably 6.0 to 7.5, such as 6.0 or 7.0 and/or wherein the TDO stretch ratio is 8.0 to 10.0, preferably 8.5 to 9.5, such as 9.0.

**3.** The BOPP film for capacitor according to claim 1 or 2,
wherein the BOPP film is obtained by sequential stretching.

**4.** The BOPP film for capacitor according to any one of claims 1 to 3,

wherein the polymeric nucleating agent (PNA) is one selected from
a long chain branched polypropylene (LCBP), wherein the LCBP is contained in the PPC at 0.100 to 5.000 wt.-%, preferably 0.100 to 4.000 wt.-%, more preferably 0.100 to 2.500 wt.-%, most preferably 0.100 to 1.500 wt.-%, based on the total weight of the PPC;

a polymer of a vinyl compound of formula $CH_2$=CH-CHR$^6$R$^7$ (PV), wherein R$^6$ and R$^7$ together form a 5- or 6-membered saturated, unsaturated or aromatic ring or independently represent an alkyl group comprising 1 to 4 carbon atoms, such as vinyl-cyclohexane or vinyl-cyclopentane, wherein the PV is contained in the PPC as a polymer fraction of the PPH at 0.0001 to 0.1000 wt.-%, preferably 0.0005 to 0.0500 wt.-%, more preferably 0.0008 to 0.0100 wt.-%, based on the total weight of the PPC; and

a nucleated polypropylene polymer (NPP), which is a polypropylene carrier polymer being nucleated by a polymer fraction of a vinyl compound of formula $CH_2$=CH-CHR$^6$R$^7$, wherein R$^6$ and R$^7$ together form a 5- or 6-membered saturated, unsaturated or aromatic ring or independently represent an alkyl group comprising 1 to 4 carbon atoms, such as vinyl-cyclohexane or vinyl-cyclopentane, wherein the NPP is contained in the PPC at 0.0010 to 4.5000 wt.-%, preferably 0.1000 to 4.0000 wt.-%, more preferably 0.2000 to 3.0000 wt.-%, most preferably 0.3000 to 1.5000 wt.-%, based on the total weight of the PPC.

**5.** The BOPP film for capacitor according to any one of claims 1 to 4,
wherein the polymeric nucleating agent (PNA) is a long chain branched polypropylene (LCBP), wherein the LCBP is a high melt strength polypropylene (HMS PP) having a F30 melt strength of at least 15 cN, determined at 200°C according to ISO 16790:2021 and a melt extensibility v30 of at least 200 m/s, determined at 200°C according to ISO 16790:2021.

**6.** The BOPP film for capacitor according to any one of claims 1 to 5, wherein the non-polymeric beta-nucleating agent (BNA) is at least one selected from quinacridone-type compounds, quinacridonequinone-type compounds and dihydroquinacridone-type compounds or a mixture thereof.

**7.** The BOPP film for capacitor according to any one of claims 1 to 6, wherein the isotactic crystalline polypropylene homopolymer (PPH) is a Ziegler-Natta catalyst-polymerized polymer, which is bi- or multimodal.

**8.** The BOPP film for capacitor according to any one of claims 1 to 7, wherein PPH has at least one of, preferably more or even all of

a weight average molecular weight $M_w$ (GPC) in the range of 300.0 to 450.0 kg/mol, preferably 320.0 to 420.0 kg/mol, more preferably 330.0 to 410.0 kg/mol, most preferably 350.0 to 400.0 kg/mol,

a molecular weight distribution $M_w/M_n$ (MWD, GPC) in the range of 8.4 to 10.5, preferably 8.5 to 10.2, more preferably 9.0 to 10.0,

a xylene cold solubles (XCS) content (25°C, ISO 16152) of 0.25 to 1.60 wt.-%, preferably 0.50 to 1.50 wt.-%, more preferably 0.75 to 1.45 wt.-%,

a melt flow rate ($MFR_2$) (230°C, 2.16 kg, ISO 1133) of 1.00 to 7.50 g/10min, preferably 2.00 to 6.00 g/10min, more preferably 2.50 to 4.40 g/10min, more preferably 2.75 to 4.00 g/10min, most preferably 2.95 to 3.75 g/10min.

**9.** The BOPP film for capacitor according to any one of claims 1 to 8,
wherein the BOPP film has a thickness in the range of 1.5 to 6.5 μm, preferably 2.0 to 5.0 μm, more preferably 2.5 to 5.5 μm.

**10.** A metal laminated film for capacitor comprising the BOPP film according to any one of claims 1 to 9, and a metal film provided on at least one surface of the BOPP film.

**11.** A capacitor comprising an insulation film comprising a layer of the BOPP film according to any of claims 1 to 9.

**12.** Use of the polypropylene composition (PPC) as defined by any of claims 1 and 4 to 8 to manufacture a BOPP film for a capacitor film having an area stretch ratio, which is obtained by multiplying the machine direction orientation (MDO) stretch ratio and the traverse direction orientation (TDO) stretch ratio, of 50 to 75, a metal laminated film comprising said BOPP film and a metal film provided on at least one surface of the BOPP film, or a capacitor comprising said BOPP film for a capacitor as a layer of an insulation film.

**13.** A process for producing a BOPP film comprising the steps of:

(A) extruding the polypropylene composition (PPC) as defined by any of claims 1 and 4 to 8 to a flat film, and
(B) orienting the flat film in the machine direction orientation (MDO) and in the transverse direction orientation (TDO) to obtain a BOPP film having an area stretch ratio, which is obtained by multiplying the machine direction orientation (MDO) stretch ratio and the traverse direction orientation (TDO) stretch ratio, of 50 to 75.

**14.** The process according to claim 13, wherein the BOPP film is made by applying

a melt temperature in the range of 240.0 to 260.0°C, preferably 245.0 to 255.0°C, more preferably 248.0 to 252.0°C, and/or, preferably and,
a chill roll temperature in the range of 80.0 to 100.0°C, preferably 85.5 to 95.0°C, more preferably 88.0 to 92.0°C, and/or, preferably and,
a machine direction orientation (MDO) temperature in the range of 135.0 to 155.0°C, preferably 140.0 to 150.0°C, more preferably 143.0 to 147.0°C, and/or, preferably and,
a transverse direction orientation (TDO) temperature in the range of 172.0 to 195.0°C, preferably 177.0 to 192.0°C, more preferably 180.0 to 190.0°C.

**15.** The process according to claim 13 or 14, wherein

the flat film is oriented by a MDO stretch ratio of 5.5 to 8.0, preferably 6.0 to 7.5, such as 6.0 or 7.0 and by a TDO stretch ratio of 8.0 to 10.0, preferably 8.5 to 9.5, such as 9.0, and/or
the orientation of the flat film in the MD and in the TD to obtain the BOPP film is conducted in a sequential process.

Fig. 1a

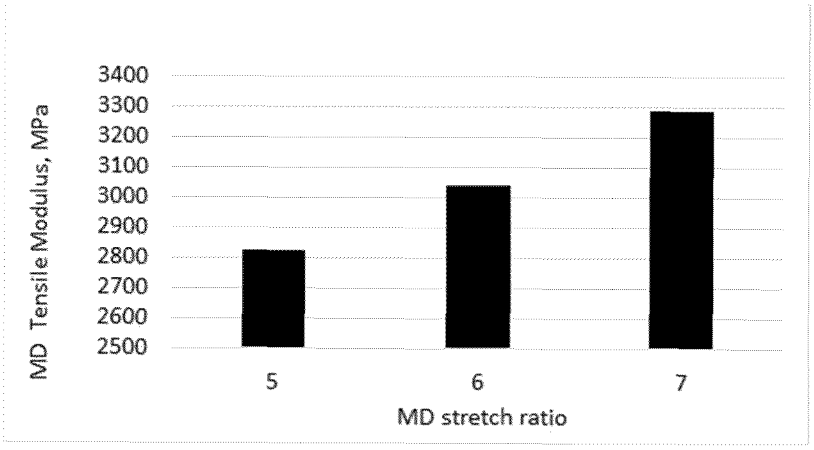


Fig. 1b

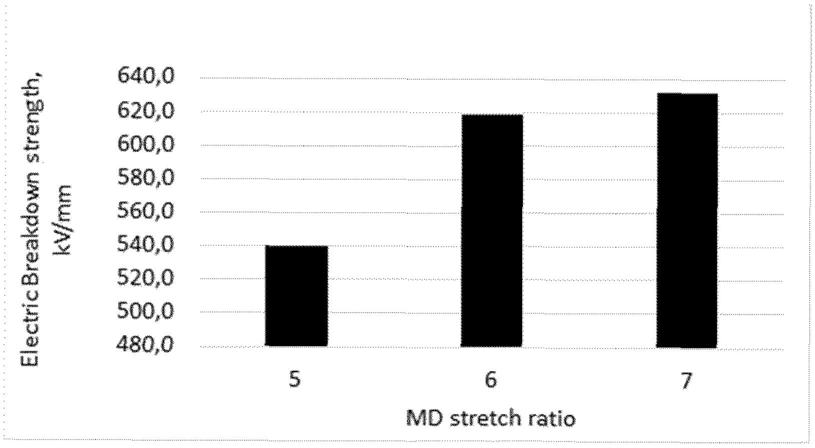


Fig. 1c

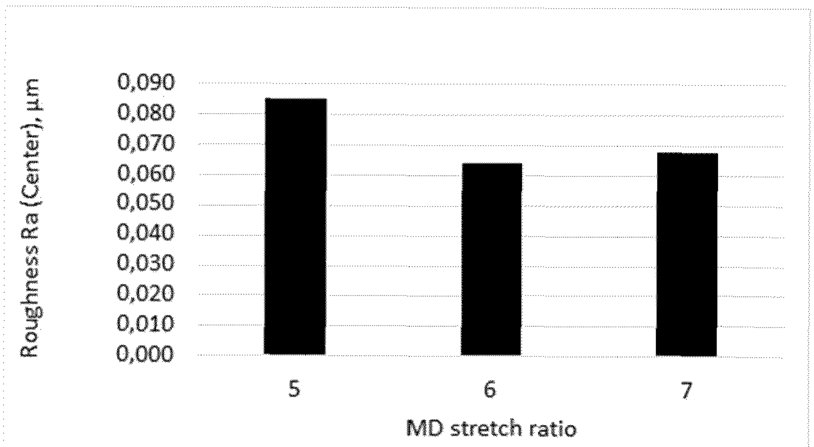

European Patent Office / Europäisches Patentamt / Office européen des brevets

# EUROPEAN SEARCH REPORT

Application Number
EP 24 18 2887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 086 299 A1 (BOREALIS AG [AT]) 9 November 2022 (2022-11-09) * paragraphs [0054], [0060] - [0062], [0145] - [0156]; claims 1-15; example 2; table 1 * | 1-15 | INV. C08J5/18 B29C48/00 B29C48/08 B29C55/12 B29C55/14 C08K5/00 C08L23/12 |
| A | WO 2017/064224 A1 (BOREALIS AG [AT]) 20 April 2017 (2017-04-20) * claims 1-15; example 1 * | 1-15 | |
| A | US 2017/183488 A1 (OHTA KATSUTOSHI [JP]) 29 June 2017 (2017-06-29) * column 0202; claims 1-16 * | 1-15 | |
| A | EP 3 922 436 A1 (TORAY INDUSTRIES [JP]) 15 December 2021 (2021-12-15) * paragraph [0075]; claims 1, 5, 13, 17, 18; examples 2, 4, 6; tables 1-1 * | 1-15 | |

TECHNICAL FIELDS SEARCHED (IPC)

C08J
C08K
B29D
B29C
C08L

The present search report has been drawn up for all claims

1

| Place of search | Date of completion of the search | Examiner |
|---|---|---|
| Munich | 25 November 2024 | Fischer, Viktor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 18 2887

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | Publication date |
|---|---|---|---|
| EP 4086299 A1 | 09-11-2022 | CN 117203269 A | 08-12-2023 |
| | | EP 4086299 A1 | 09-11-2022 |
| | | JP 2024516281 A | 12-04-2024 |
| | | KR 20230164710 A | 04-12-2023 |
| | | WO 2022233733 A1 | 10-11-2022 |
| WO 2017064224 A1 | 20-04-2017 | BR 112018006812 A2 | 16-10-2018 |
| | | CN 108137833 A | 08-06-2018 |
| | | EA 201800232 A1 | 28-09-2018 |
| | | EP 3362504 A1 | 22-08-2018 |
| | | ES 2842237 T3 | 13-07-2021 |
| | | JP 6592192 B2 | 16-10-2019 |
| | | JP 2018538373 A | 27-12-2018 |
| | | KR 20180061328 A | 07-06-2018 |
| | | MX 367195 B | 08-08-2019 |
| | | SG 11201802793S A | 30-05-2018 |
| | | TW 201726374 A | 01-08-2017 |
| | | US 2018298172 A1 | 18-10-2018 |
| | | WO 2017064224 A1 | 20-04-2017 |
| US 2017183488 A1 | 29-06-2017 | CN 106574092 A | 19-04-2017 |
| | | EP 3176215 A1 | 07-06-2017 |
| | | JP 6445561 B2 | 26-12-2018 |
| | | JP WO2016017752 A1 | 01-06-2017 |
| | | KR 20170012349 A | 02-02-2017 |
| | | SG 11201609868T A | 27-02-2017 |
| | | US 2017183488 A1 | 29-06-2017 |
| | | WO 2016017752 A1 | 04-02-2016 |
| EP 3922436 A1 | 15-12-2021 | CN 113382839 A | 10-09-2021 |
| | | EP 3922436 A1 | 15-12-2021 |
| | | KR 20210130714 A | 01-11-2021 |
| | | US 2022135780 A1 | 05-05-2022 |
| | | WO 2020171163 A1 | 27-08-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3124523 A1
- WO 2016038092 A1
- US 2018068791 A1
- WO 2021239594 A1
- WO 2013004781 A1
- EP 607703 A
- EP 1028984 A
- EP 1028985 A
- EP 1030878 A
- WO 9924479 A
- WO 0068315 A
- EP 1801157 A
- EP 1801155 A
- EP 1818365 A
- WO 2020127861 A1
- EP 1892264 A
- EP 0879830 A1
- EP 0574801 A
- EP 0574804 A
- EP 0190889 A2
- EP 0384431 A2
- EP 0142724 A2
- EP 0678527 A
- EP 0688817 A
- EP 0450342 A
- EP 177961 A
- EP 682066 A
- WO 2020127862 A1


### Non-patent literature cited in the description


- **M. GAHLEITNER** ; **C. GREIN** ; **S. KHEIRANDISH** ; **J. WOLFSCHWENGER**. Nucleation of Polypropylene Homo- and Copolymers. *Intern.Polym.Proc.*, 2011, vol. 26, 2-20
- *CHEMICAL ABSTRACTS*, 1047-16-1
- *CHEMICAL ABSTRACTS*, 1503-48-6
- *CHEMICAL ABSTRACTS*, 5862-38-4
- *CHEMICAL ABSTRACTS*, 153250-52-3
- *CHEMICAL ABSTRACTS*, 19455-79-9
- *CHEMICAL ABSTRACTS*, 6683-19-8
- *CHEMICAL ABSTRACTS*, 31570-04-4
- *CHEMICAL ABSTRACTS*, 693-36-7
- **M. H. WAGNER**. Rheotens-Mastercurves and Drawability of Polymer Melts. *Polymer Engineering and Sience*, vol. 36, 925-935
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromolecules*, 1997, vol. 30, 6251
- **ZHOU, Z.** ; **KUEMMERLE, R.** ; **QIU, X.** ; **REDWINE, D** ; **CONG, R.** ; **TAHA, A.** ; **BAUGH, D.** ; **WINNIFORD, B.** *J. Mag. Reson.*, 2007, vol. 187, 225
- **BUSICO, V** ; **CARBONNIERE, P.** ; **CIPULLO, R.** ; **PELLECCHIA, R.** ; **SEVERN, J.** ; **TALARICO, G.** *Macromol. Rapid Commun*, 2007, vol. 28, 11289